# EUROPEAN PATENT APPLICATION

(11) **EP 3 511 887 A1**
(43) Date of publication of application: **17.07.2019**
(21) Application number: 19151731.7
(22) Date of filing: 14.01.2019
(51) Int. Cl.: G06Q 10/10, G06Q 30/00, G06Q 30/02, G06Q 10/06, G06F 17/27, H04L 12/58

(54) **AUTOMATED CHAT ASSISTANT FOR PROVIDING INTERACTIVE DATA USING NPL - NATURAL LANGUAGE PROCESSING - SYSTEM AND METHOD**

(30) Priority: 16.01.2018 US 201815872454
(71) Applicant: Capital One Services, LLC, McLean, Virginia 22102 (US)
(72) Inventor: RELANGI, Aditya, 75063 Irving, TX (US); CHITNIS, Abhijit, 75035 Frisco, TX (US)
(74) Representative: Leonhard, Frank Reimund

(57) **Abstract**

Providing interactive data in real time via an automated assistant 120 within a chat user interface 300. Displaying the chat user interface including an input field for receiving text and a display window for displaying user messages and interactive real-time data. Receiving text 520 representing a request for interactive real-time data 320, processing the text using natural language processing NLP and generating request data. Establishing a communication link to a storage device that stores the first interactive real-time data based on the request data. Receiving the interactive real-time data 320 from the storage device, displaying the first interactive real-time data in the display window, and updating 550 the first interactive real-time data displayed in the display window based on an update to the first interactive real-time data made at the storage device.

## Description

The disclosure relates to systems and methods for providing an automated assistant for providing interactive data in response to user requests, and more particularly providing systems and methods for providing a chat user interface to receive and automatically process requests for interactive real-time data using natural language processing.

Businesses often employ a sales force that commonly attempt to make sales to customers via sales calls. In some instances, a salesperson may reach out to the customer and in some instances the customer may reach out to the business and be connected with a salesperson. During a typical sales call, a salesperson may want to present information and data to the customer, such as inventory, prices, interest rates, prior sales figures, competitor information, and the like, in order to provide the customer with information in an attempt to make a sale. Such sales calls may often be short in duration, possibly lasting a minute or two. Therefore, it can be crucial for salespeople to have quick access to relevant data that they can present to a customer during such a call.

One method of providing data to a salesperson may be to provide a software-based graphical user interface (GUI) that enables the salesperson to access all the data needed. However, because there may be an extremely large amount of data and data may be organized in different formats, such systems may require a hierarchical organizational structure that requires a user to navigate through menus or tabs to find the data they need. Such systems may be cumbersome to use and may require too much time to navigate through and load the data that they may be impractical. Further, such systems may have a rigid structure and may not allow a user to view two or more data sets at once to draw comparisons between them. Moreover, in addition to being cumbersome to use, users of such systems may also experience information overload due to a lack of providing pertinent data that is personalized to the user, customer, or circumstance.

Automated chatbots may be used to retrieve information, however conventional chatbots are generally built to either provide answers to very specific question set (i.e., predetermined questions) or to a wide variety of questions at a surface level. For example, a conventional automated chatbot may be used to tell a user what their account balance is or what the temperature in a remote city is. But, because chatbots generally operate on third-party platforms that are intended for general audiences, chatbot programs generally do not have control over the data being accessed, thereby preventing the chatbot program from determining which and how much data is produced, the form the data is presented in, or incorporating functionality that enables the chatbot to render the data interactive and updatable. Accordingly, such conventional chatbots may not be configured to present raw data in the form of charts, graphs, tables, and the like that is interactive and manipulatable.

Search engines may be used to retrieve data, however, a user must typically sift through the results to find the specific data they are looking for, which takes time and effort. Further, such search results may not provide interactive real-time data that may be useful to a salesperson who requires current manipulatable data.

Accordingly, there is a need for improved systems and methods to facilitate the real-time provision of interactive data to a salesperson. Embodiments of the present disclosure are directed to this and other considerations.

A corresponding technical problem is to be solved.

Disclosed embodiments provide systems and methods for providing interactive data in real time. Some embodiments provide the interactive data via an automated assistant within a chat user interface.

Consistent with the disclosed embodiments, a method of providing interactive data in real time via an automated assistant within a chat user interface may include displaying, via an electronic display of a computing device, a chat user interface that may include an input field for receiving text input by a user of the chat user interface and a display window for displaying user messages and interactive real-time data. The user messages may be generated via the received text input. The method may include receiving, via the input field, first text representing a request for first interactive real-time data of the interactive real-time data. The method may further include generating first request data indicative of the first interactive real-time data in response to processing the first text using natural language processing techniques. The method may further include establishing a communication link to a storage device that stores the first interactive real-time data based on the first request data. The method may further include receiving the first interactive real-time data from the storage device and displaying the first interactive real-time data in the display window. The method may further include updating the first interactive real-time data displayed in the display window based on an update to the first interactive real-time data made at the storage device.

Consistent with the disclosed embodiments, systems and non-transitory computer-readable mediums for providing interactive data in real time via an automated assistant within a chat user interface are also disclosed.

Further features of the disclosed design, and the advantages offered thereby, are explained in greater detail hereinafter with reference to specific embodiments illustrated in the accompanying drawings, wherein like elements are indicated be like reference designators.

The claims are included by reference here. Mainly the independent claims 1 and 11.

Reference will now be made to the accompanying drawings, which are not necessarily drawn to scale, and which are incorporated into and constitute a portion of this disclosure, illustrate various implementations and aspects of the disclosed technology and, together with the description, serve to explain the principles of the disclosed (and claimed) technology. In the drawings different colors (other than black and white) are presently, but will be replaced during the proceedings by different hatchings (hatch for color).
FIG. 1 is a diagram of an exemplary system that may be used to provide interactive data in real time via an automated assistant;
FIG. 2 is a component diagram of an exemplary customer service representative terminal;
FIGS. 3A to 3K are exemplary embodiments of chat user interfaces of a system to provide interactive data in real time via an automated assistant;
FIG. 4 is a flowchart of an exemplary method for providing interactive data in real time via an automated assistant;
FIG. 5 is a flowchart of an exemplary method for providing interactive data in real time via an automated assistant for display via a chat user interface;
FIG. 6 is a flowchart of another exemplary method for providing interactive data in real time via an automated assistant within a chat user interface.

Some implementations of the disclosed technology will be described more fully with reference to the accompanying drawings. This disclosed technology may, however, be embodied in many different forms and should not be construed as limited to the implementations set forth herein. The components described hereinafter as making up various elements of the disclosed technology are intended to be illustrative and not restrictive. Many suitable components that would perform the same or similar functions as components described herein are intended to be embraced within the scope of the disclosed electronic devices and methods. Such other components not described herein may include, but are not limited to, for example, components developed after development of the disclosed technology.

It is also to be understood that the mention of one or more method steps does not preclude the presence of additional method steps or intervening method steps between those steps expressly identified. Similarly, it is also to be understood that the mention of one or more components in a device or system does not preclude the presence of additional components or intervening components between those components expressly identified.

The disclosed embodiments are directed to methods for providing interactive data in real time via an automated assistant within a chat user interface. In one embodiment, a method may include displaying, via an electronic display of a computing device, a chat user interface that may include an input field for receiving text input by a user of the chat user interface and a display window for displaying user messages and interactive real-time data. The user messages may be generated via the received text input. The method may include receiving, via the input field, first text representing a request for first interactive real-time data of the interactive real-time data. The method may further include generating first request data indicative of the first interactive real-time data in response to processing the first text using natural language processing techniques. The method may further include establishing a communication link to a storage device that stores the first interactive real-time data based on the first request data. The method may further include receiving the first interactive real-time data from the storage device and displaying the first interactive real-time data in the display window. The method may further include updating the first interactive real-time data displayed in the display window based on an update to the first interactive real-time data made at the storage device.

In another embodiment, a method for providing interactive data in real time via an automated assistant via a chat user interface is disclosed. The method may include establishing a communication link to a computing device that may be configured to display the chat user interface to a user of the computing device. The chat interface may be configured to display user messages, automatically generated system messages, and interactive real-time data. The method may include receiving first text representing a request for first interactive real-time data of the interactive real-time data from the computing device. The first text may be generated in response to an input by the user of the computing device. The method may include generating first request data indicative of the first interactive real-time data in response to processing the first text representing the request for first interactive real-time data using natural language processing techniques. The method may include transmitting, based on the first request data, the first interactive real-time data for display at the computing device. The method may further include, in response to receiving data indicative of an update to the first interactive real-time data, updating the first interactive real-time data and transmitting the updated first interactive real-time data to the computing device.

In another embodiment, a method for providing interactive data in real time via an automated assistant within a chat user interface is disclosed. The method may include displaying the chat user interface, which may include an input field for inputting text and a display window for displaying messages and interactive real-time data in response to receiving caller ID information associated with an incoming phone call. The method may include determining the identity of a merchant associated with the incoming phone call based on the caller ID information. The method may include displaying merchant information via the display window and based on the identity of the merchant. The method may include receiving user input text representing a request for interactive real-time data associated with the merchant via the input field. The method may include identifying the requested interactive real-time data associated with the merchant that is represented by the user input text based on natural language processing of the user input text. The method may include receiving the interactive real-time data associated with the merchant from a storage device. The method may further include displaying, via the display window, the interactive real-time data associated with the merchant, wherein the interactive real-time data associated with the merchant may be displayed as an interactive real-time bar chart that may include a plurality of selectable portions.

In another embodiment, a system may include one or more memory devices storing instructions, and one or more processors configured to execute the instructions to perform steps of a method of providing interactive data in real time via an automated assistant within a chat user interface as disclosed herein.

In another embodiment, a non-transitory computer-readable medium is disclosed. The non-transitory computer-readable medium may store instructions that, when executed by one or more processors, cause a system to execute a method of providing interactive data in real time via an automated assistant within a chat user interface as disclosed herein.

Reference will now be made in detail to exemplary embodiments of the disclosed technology, examples of which are illustrated in the accompanying drawings and disclosed herein. Wherever convenient, the same references numbers will be used throughout the drawings to refer to the same or like parts.

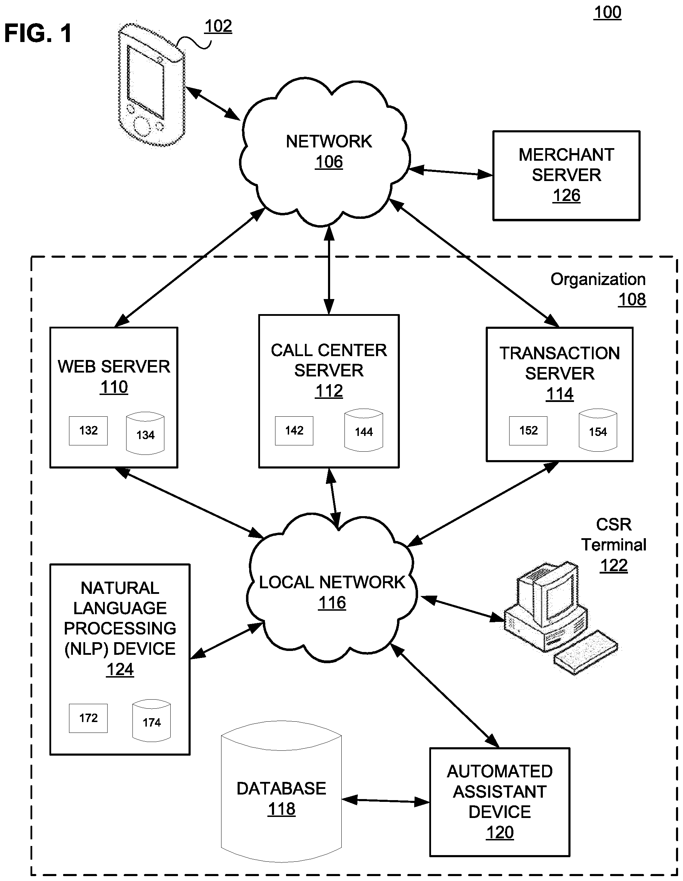

FIG. 1 is a diagram of an exemplary system 100 that may be configured to perform one or more processes that may provide interactive data in real time via a user interface. In some embodiments, the interactive data may be provided via an automated assistant within a chat user interface. The components and arrangements shown in FIG. 1 are not intended to limit the disclosed embodiments as the components used to implement the disclosed processes and features may vary. As shown, system 100 may include a user device 102, a network 106, a merchant server 126, and an organization 108 including, for example, a web server 110, a call center server 112, a transaction server 114, a local network 116, a database 118, an automated assistant device 120, a customer service representative (CSR) terminal 122, and a natural language processing (NLP) device 124.

In some embodiments, a customer may operate user device 102. User device 102 can include one or more of a mobile device, smart phone, general purpose computer, tablet computer, laptop computer, telephone, PSTN landline, smart wearable device, voice command device, other mobile computing device, or any other device capable of communicating with network 106 and ultimately communicating with one or more components of organization 108. In some embodiments, a user device may include or incorporate electronic communication devices for hearing or vision impaired users. User device 102 may belong to otherwise be associated with a customer. Customers may include individuals such as, for example, subscribers, clients, prospective clients, or customers of an entity associated with organization 108, such as individuals who have obtained, will obtain, or may obtain a product, service, or consultation from an entity associated with organization 108. For example, a customer or potential customer may be a car dealership seeking a bank to issue a loan to a purchaser of a vehicle and user device 102 may be a mobile phone or landline associated with the car dealership. As will be appreciated, when making a phone call, user device 102 may transmit caller ID information, such as a name or phone number associated with user device 102 or the owner or operator of user device 102. In some embodiments, caller ID information may be obtained for user device 102 without the user device transmitting the caller ID information.

Network 106 may be of any suitable type, including individual connections via the internet such as cellular or WiFi networks. In some embodiments, network 106 may connect terminals, services, and mobile devices using direct connections such as radio-frequency identification (RFID), near-field communication (NFC), Bluetooth™, low-energy Bluetooth™ (BLE), WiFi™, ZigBee™, ambient backscatter communications (ABC) protocols, USB, WAN, or LAN. Because the information transmitted may be personal or confidential, security concerns may dictate one or more of these types of connections be encrypted or otherwise secured. In some embodiments, however, the information being transmitted may be less personal, and therefore the network connections may be selected for convenience over security.

Network 106 may comprise any type of computer networking arrangement used to exchange data. For example, network 106 may be the Internet, a private data network, virtual private network using a public network, and/or other suitable connection(s) that enables components in system environment 100 to send and receive information between the components of system 100. Network 106 may also include a public switched telephone network ("PSTN") and/or a wireless network.

Organization 108 may be associated with an entity such as a business, corporation, individual, partnership, or any other entity that provides one or more of goods, services, and consultations to individuals such as customers. For example, in some embodiments, organization 108 may be associated with a financial services provider.

Organization 108 may include one or more servers, devices, and computer systems for performing one or more functions associated with products and/or services that organization 108 provides. Such servers, devices, and computer systems may include, for example, web server 110, call center server 112, transaction server 114, database 118, automated assistant device 120, CSR terminal 122 and NLP device 124, as well as any other computer systems necessary to accomplish tasks associated with organization 108 or the needs of customers (which may be customers of the entity associated with organization 108).

Web server 110 may include a computer system configured to generate and provide one or more websites accessible to customers, as well as any other individuals involved in organization 108's normal operations. Web server 110 may include a computer system configured to receive communications from a user device 102 via for example, a mobile application, a chat program, an instant messaging program, a voice-to-text program, an SMS message, email, or any other type or format of written or electronic communication. Web server 110 may have one or more processors 132 and one or more web server databases 134, which may be any suitable repository of website data. Information stored in web server 110 may be accessed (e.g., retrieved, updated, and added to) via local network 116 and/or network 106 by one or more devices of system 100. According to some embodiments, web server 110 may receive communications from customers, such as inquiries regarding the purchase or sale of products or services. For example, web server 110 may receive a message inquiring about the availability of a car loan via a web-enabled chat application, instant message, email, or other electronic user input transmit to web server 110 via, for example, user device 102. In some embodiments, web server 110 may be configured to facilitate a chat session or instant messaging session between a customer service representative using a customer service terminal and a customer using user device 102.

Call center server 112 may include a computer system configured to receive, process, and route telephone calls and other electronic communications with a customer operating user device 102. Call center server 112 may have one or more processors 142 and one or more call center databases 144, which may be any suitable repository of call center data. Information stored in call center server 112 may be accessed (e.g., retrieved, updated, and added to) via local network 116 and/or network 106 by one or more devices of system 100. In some embodiments, call center server processor 142 may be used to implement an interactive voice response (IVR) system that interacts with the customer over the phone. In some embodiments, call center server 112 may be configured to route an incoming call to a customer service representative. In some embodiments, call center server 112 may receive caller ID information in association with an incoming phone call, such as a phone call made by user device 102. Caller ID information may include information such as a name, phone number or the identity of a caller associated with the incoming call and may cause the caller ID information to be displayed to a customer service representative via for example, a phone, a computer, or other device used by the customer service representative. In some embodiments, call center server 112 may identify a customer based on the caller ID information and may cause information associated with the identified customer to be displayed to a customer service representative. For example, if call center server 112 determines that an incoming call is being made from a particular car dealership, call center server 112 may cause information relating to the particular car dealership, such as the name of the dealership, the name of the individual making the call, previous sales of loans to the dealership, and other information that may be useful to a sales person, to display at a customer service terminal, such as a computer used by a sales person. In some embodiments, call center server processor 142 may be configured to perform a voice-to-text functionality such that call center server 112 may convert words spoken on an incoming call into text.

Transaction server 114 may include a computer system configured to process one or more transactions involving an account associated with a customer, or a request received from customers. In some embodiments, transactions can include, for example, a product/service purchase, product/service return, financial transfer, financial deposit, financial withdrawal, financial credit, financial debit, dispute request, warranty coverage request, an issued loan, previous loan payments, and any other type of transaction associated with the products and/or services that an entity associated with organization 108 provides to individuals such as customers. Transaction server 114 may have one or more processors 152 and one or more transaction server databases 154, which may be any suitable repository of transaction data. Information stored in transaction server 114 may be accessed (e.g., retrieved, updated, and added to) via local network 116 and/or network 106 by one or more devices of system 100.

Local network 116 may comprise any type of computer networking arrangement used to exchange data in a localized area, such as WiFi, Bluetooth™Ethernet, and other suitable network connections that enable components of organization 108 to interact with one another and to connect to network 106 for interacting with components in system environment 100. In some embodiments, local network 116 may comprise an interface for communicating with or linking to network 106. In other embodiments, components of organization 108 may communicate via network 106, without a separate local network 116.

According to some embodiments, database 118 may be a database associated with organization 108 and/or its related entity that may store a variety of information relating to customers, transactions, customer information, and business operations. Database 118 may also serve as a back-up storage device and may contain data and information that is also stored on, for example, local databases associated with web server 110, call center server 112, transaction server 114, automated assistant device 120, CSR terminal 122, or NLP device 124. Database 118 may be accessed by other devices and may be used to store records of every interaction, communication, and/or transaction a particular customer has had with organization 108 and/or its related entity.

Automated assistant device 120 may include a computer system configured to facilitate the presentation of automated messages and interactive real-time data to a user of CSR terminal 122. According to some embodiments, automated assistant device 120 may receive data indicative of a user message from CSR terminal 122, which may be representative of a request for interactive real-time data, a response to a question, or other statements made by a user of CSR 122. According to some embodiments, automated assistant device 120 may cause the user message to be processed using natural language processing techniques by, for example, forwarding the user message to NLP device 124. According to some embodiments, automated assistant device 120 may receive request data indicative of a request for interactive real-time data form NLP device 124.

For example, automated assistant device 120 may forward a user message for example saying "I want to see total Jeep apps" to NLP device 124, and following natural language processing of the user message by NLP device 124. Automated assistant device 120 may receive request data indicative of a request for information relating to the total number of loan applications for Jeep dealerships. The type of car is taken as an embodiment of a product, e.g. a car.

According to some embodiments, automated assistant device 120 may access, receive, or fetch interactive real-time data pertaining to request data. For example, in response to receiving request data indicative of a request for information relating to the total number of loan applications for the e.g. Jeep dealerships, automated assistant device 120 may access database 118 to look up data relating to the total number of loan applications for Jeep dealerships. Automated assistant device 120 may then cause the retrieved interactive real-time data to be displayed by CSR terminal 122 by, for example, transmitting the data to CSR terminal 122.

Although the disclosure refers to the display of interactive real-time data, it should be understood it is also contemplated that data that is not interactive or automatically updated in real time may also be displayed by CSR terminal 122 in a manner similar to that described with respect to the interactive real-time data.

In some embodiments, automated assistant device 120 may retrieve data from multiple sources and aggregate the data for display by CSR terminal 122. In some embodiments, automated assistant device 120 may determine a format in which to display the retrieved interactive real-time data. For example, automated assistant device 120 may determine that the retrieved data may be displayed a bar chart, a graph, a table, pie chart, treemap, line chart, scatter plot, area chart, steamgraph, bubble chart, heatmap, polar chart, pyramid chart, or any other such form of organizing and/or displaying data. According to some embodiments, automated assistant device 120 may determine a display format of interactive real-time data based on one or more of a predefined user preference, user historical data (e.g., the format the user has used to view similar data in the past), or a predetermined display format that is associated with the data that may be, for example, designated by a system administrator or user. According to some embodiments, automated assistant device 120 may utilize machine learning techniques, such as Naive Bayes classifiers, decision trees, name entity recognition, and other such techniques in order to make determinations about what data to present to the user based on a user request, the format used to present the data (e.g., chart vs. table), and recommendations for data to present to the user that the user has not specifically requested. For example, based on the current state of the conversation with a merchant customer (e.g., what data has already been displayed to a user of CSR terminal 122 during the conversation), historical usage of the user and/or data requested with respect to a particular merchant or customer, automated assistant device may utilize machine learning to make predictions about what data a particular user may want to view next and generate recommendations to present to the user.

According to some embodiments, automated assistant device 120 may establish a communication link between CSR terminal 122 and one or more devices that store the interactive real-time data for display at CSR terminal 122 (such storage devices may be referred to as the "source" of the data), so that if any of the interactive real-time data is updated at the source, then automated assistant device 120 may cause the data to be automatically updated at CSR terminal 122. For example, if a user has requested interactive real-time data representing the total number of auto loan applications for the current month for 10 different dealerships, then automated assistant device 120 may establish a communication link between CSR terminal 122 and a device that stores the auto loan application data sought, such as for example, database 118, in order to facilitate the display of the data stored at database 118 by CSR terminal 122. If the number of auto loan applications for a particular dealership is updated at database 118, due to a recent sale, for example, then automated assistant device 120 may cause the displayed number of auto loan applications for that dealership to increase at CSR terminal 122. In this way, a salesperson utilizing the chat user interface described herein at CSR terminal 122 may view data in the display window that is automatically updated in real-time. According to some embodiments, a user of CSR terminal 122 may also cause updates to be made to the interactive real-time data via the chat user interface. In some embodiments, a user of CSR terminal 122 viewing interactive real-time data in a display window of a chat user interface may input a change to the data, by for example, performing some input action with respect to the data, such as clicking, highlighting, dragging, swiping, tapping, or inputting text. For example, a user may view interactive real-time data that represents an auto loan application form via CSR terminal 122, and the user may be enabled to input information into the form and select a "submit" button that signifies the submission of the application. In response to submitting the application, automated assistant device 120 may cause the auto loan application data to be transferred to a storage device, such as database 118, and may further cause other interactive real-time data to update, such as, for example, the total number of auto loan applications associated with the dealership that was the subject of the auto loan application. In this way, system 100 provides capabilities for multiple salespeople to utilize different CSR terminals 122 simultaneously, and automated assistant device 120 may enable the data being displayed by the chat user interface at each CSR terminal 122 to be up to date in real time, in response to changes being made to the interactive real-time data by one or more of the salesmen or from other sources that have access to the data stored at the source.

CSR terminal 122 may include, but is not limited to, a terminal, a desktop computer, a laptop computer, a mobile device such as a smart phone or tablet device, and any other computerized devices configured to communicate with local network 116 to perform various functions relating to organization 108 such as, for example, receiving telephone calls and conducting teleconferences with customers, engaging in written conversations with customers using a chat, instant messaging, or email program, accessing, viewing, and/or modifying customer data stored by any device associated with organization 108 (e.g., database 118), and any other functions associated with organization 108's products or services including analyzing individuals' data, placing orders, cancelling orders, issuing credits and refunds, processing withdrawals, deposits, and transfers, and other functions relating to products, services, or accounts associated with customer. CSR terminal 122 may be configured to display a chat user interface to a customer service representative that may provide an automated chat functionality that may enable a customer service representative to request customer data and other information in real-time.

An employee may operate CSR terminal 122, and the employee may comprise any individual employed by organization 108 or involved in the operations of organization 108 including, for example, a customer service agent/representative, an account manager, a product or service manager, a salesperson, etc. Additionally, in some embodiments organization 108 may comprise a plurality of CSR terminals 122 and employees. In some embodiments, CSR terminal 122 may enable a salesperson to hold voice conversations with a customer or merchant via call center server 112 (e.g., via voice-over-IP) or written conversations with a customer or merchant via web server 110 (e.g., via a chat program). CSR terminal 122 may display an interactive chat user interface that may enable a salesperson to converse with an automated chatbot (e.g., via automated assistant device 120), and view and interact with real time data, such as for example, sales reports, market intelligence reports, planning reports, real time inventory reports, compensation or commission reports, ranking reports, productivity reports. As will be described in greater detail below, in some embodiments, a chat user interface may be configured to display user messages, system messages, and interactive real-time data. User messages may be messages that are generated in response to receiving text input by a user (e.g., a salesman typing a message into an input field) and system messages may be messages that are automatically generated by system 100 (e.g., via automated assistant device 120) in response to a user message, prompting the user to input a response, or simply providing the user with information. Interactive real-time data may be data that is stored on a database of CSR terminal 122, a cloud server, or another device associated with organization 108 (e.g., database 118) and it may be displayed by CSR terminal 122 in the form of charts, tables, graphs, pie charts, treemaps, line charts, scatter plots, area charts, steamgraphs, bubble charts, heatmaps, polar charts, pyramid charts or any other such form or format of representing data. According to some embodiments, the interactive real-time data displayed by CSR terminal 122 may be interactive because system 100 (e.g., automated assistant device 120) may generate selectable charts, tables, graphs and/or maps or charts, tables, graphs and/or maps with one or more selectable portions for display by chat user interface 300. For example, in some embodiments, each bar of a bar chart may be selectable, and upon being selected may cause some effect, such as for example, modifying the form of the data displayed (e.g., change a bar chart into a line graph), modifying the resolution of the data displayed (e.g., change a display of data by year to a display of data by month), modifying the content of the data displayed (e.g., change from showing September sales to showing October sales), or any other such change or manipulation of the data that may be useful to a user of chat user interface 300. System 100 may assign event listeners to selectable portions of interactive data displayed by display window 302 that may be configured to detect when a portion has been selected by a user by, for example, clicking on a bar of a bar chart. System 100 (e.g., via automated assistant device 120) may associate predetermined functions with selectable portions of the interactive data, as well as buttons or other selectable regions of display window 302 or chat user interface 300. Accordingly, system 100 may execute an associated predetermined function upon detecting the input of a user selection. For example, if system 100 detects that a user has clicked on a bar of a bar chart, system 100 may execute a predetermined function that causes display window 302 to display a new bar chart depicting the disaggregated data included in the selected bar of the first bar chart. According to some embodiments, the interactive real-time data displayed by chat user interface 300 may be considered to be real-time data because the data displayed by chat user interface 300 may be bound to the source of the data (e.g., database 118) such that the data may be automatically updated in chat user interface 300 if it is updated at the source. According to some embodiments, interactive real-time data displayed by chat user interface 300 may be automatically updated using long polling by, for example, CSR terminal 122 periodically pinging the source of the data for updates.

Natural language processing device (NLP device) 124 may include a computer system configured to receive and process user messages and determine a meaning of the user message. As will be understood by those of skill in the art, NLP device 124 may use natural language processing techniques and functionalities such as syntax analysis, parsing, part-of-speech tatting, sentence breaking, morphological segmentation, word segmentation, stemming, terminology extraction, lexical semantics, machine translation, named entity recognition, natural language generation, natural language understanding, relationship extraction, sentiment analysis, topic segmentation and analysis, word sense disambiguation, and the like to implement an automated chatbot that may be capable of determining a meaning of a user message and automatically responding appropriately. For example, if a user message says, "provide total apps for Jeep," NLP device 124 may determine that a user is requesting information about the total of number of loan applications relating to Jeep dealerships. Accordingly, NLP device may generate request data that represents a request for data representative of the total number of loan applications relating to Jeep dealerships that may then be used by system 100 (e.g., via automated assistant device 120) to access, receive, or fetch the associated data for display at CSR terminal 122. In some embodiments, NLP device 124 may be configured to automatically generate a natural language message that may be referred to herein as a system message, which may be displayed via the chat user interface by CSR terminal 122. In some embodiments, a NLP device 124 may generate a system message in response to a user message. In some embodiments, NLP device 124 may generate a system message prompting a user to provide an answer to a question. For example, system 100 (e.g., via automated assistant device 120) may determine that a user may be interested in a particular set of data despite not having requested the data, and in response to that determination, NLP device 124 may generate a system message saying, for example, "Would you like to view the total number of auto loan applications for Jeep in the last two months?", which may be sent to CSR terminal 122 for display.

In some embodiments, NLP device 124 may utilize machine learning techniques to increase its accuracy in correctly understanding the meaning of user messages. For example, according to some embodiments, in relation to a particular user, NLP device 124 may track and analyze instances of where the user appeared to be satisfied with the data provided in response to the user message and instances where the user did not appear to be satisfied to learn which responses that best fulfill the particular user's request, based on the language of the user message used by the user. According to some embodiments, NLP device 124 may determine that a user was satisfied with a response if the user interacted with data included in the response. In some embodiments, NLP device 124 may determine that a user was not satisfied with the response if the user submits a second request for data within a predetermined time of the response. For example, if the user message says, "show me applications for Jeep" and NLP device 124 generates request data that results in the CSR device 122 displaying a chart of the total number of auto loan applications for a particular Jeep dealership and within 5 seconds of CSR device 122 displaying the chart, the user inputs a second user message saying, for example, "show me total applications for Jeep," then NLP device 124 may determine that the user was unsatisfied with the response.

NLP device 124 may have one or more processors 172 and one or more NLP databases 174, which may be any suitable repository of NLP data. Information stored in NLP device 124 may be accessed (e.g., retrieved, updated, and added to) via local network 116 and/or network 106 by one or more devices (e.g., dialogue management device 120) of system 100. In some embodiments, NLP processor 172 may be used to implement an NLP system that can determine the meaning behind a user message and convert it to a form that can be understood by other devices, generate instructions to other devices based on a determined meaning of the user message, and/or generate natural language responses and other natural language system messages to be displayed to user via CSR terminal 122.

Merchant server 126 may be one or more computing devices that store merchant information. Merchant information may be, for example, inventory, prices, customer lists, loan application data, sales information, location information associated with store locations, customer information including customer demographics, and any other information about customers, products, services, or business operations that a merchant may store. In some embodiments, merchant server 126 may be associated with a customer making an incoming call to system 100 via, for example user device 102. For example, in some embodiments, merchant server 126 may be associated with a car dealership and merchant server 126 may include merchant data relating to the dealership's inventory of vehicles, outstanding auto loans with customer, auto loan applications in progress, historical sales information, and customer information. According to some embodiments, web server 110 may be configured to exchange data with merchant server 126 via network 106. For example, in some embodiments, web server 110 may receive information regarding auto loan applications associated with customers of a car dealership or web server 110 may provide merchant server 126 with a quote for a loan to be issued in response to a loan application or any other data that may facilitate a transaction between the entity associated with organization 108 and the customer (e.g., dealership) associated with merchant server 126.

Although the preceding description describes various functions of a web server 110, call center server 112, transaction server 114, database 118, automated assistant device 120, CSR terminal 122, natural language processing device 124, and merchant server 126, in some embodiments, some or all of these functions may be carried out by a single computing device. For example, some or all of the functions of web server 110, call center server 112, transaction server 114, database 118, automated assistant device 120, CSR terminal 122 and NLP device 124 may be carried out by a single device.

For ease of discussion, embodiments may be described in connection with use of a user interface by a customer service representative to load, view and interact with real-time data during a sales call by utilizing natural language processing techniques to identify the data being sought by the customer service representative, and in particular, a sales call related to the issuance of a loan to a purchaser of an automobile from a car dealership. It is to be understood, however, that disclosed embodiments are not limited to use of the chat user interface during sales calls, but rather the embodiments described herein may be applied to providing a user interface that is capable of automatically providing real-time data in response to user requests in many other contexts. Further, steps or processes disclosed herein are not limited to being performed in the order described, but may be performed in any order, and some steps may be omitted, consistent with the disclosed embodiments.

The features and other aspects and principles of the disclosed embodiments may be implemented in various environments. Such environments and related applications may be specifically constructed for performing the various processes and operations of the disclosed embodiments or they may include a computer or computing platform selectively activated or reconfigured by program code to provide the necessary functionality. Further, the processes disclosed herein may be implemented by a suitable combination of hardware, software, and/or firmware. For example, the disclosed embodiments may implement general purpose machines configured to execute software programs that perform processes consistent with the disclosed embodiments. Alternatively, the disclosed embodiments may implement a specialized apparatus or system configured to execute software programs that perform processes consistent with the disclosed embodiments. Furthermore, although some disclosed embodiments may be implemented by general purpose machines as computer processing instructions, all or a portion of the functionality of the disclosed embodiments may be implemented instead in dedicated electronics hardware.

The disclosed embodiments also relate to tangible and non-transitory computer readable media that include program instructions or program code that, when executed by one or more processors, perform one or more computer-implemented operations. The program instructions or program code may include specially designed and constructed instructions or code, and/or instructions and code well-known and available to those having ordinary skill in the computer software arts. For example, the disclosed embodiments may execute high level and/or low level software instructions, such as machine code (e.g., such as that produced by a compiler) and/or high level code that can be executed by a processor using an interpreter.

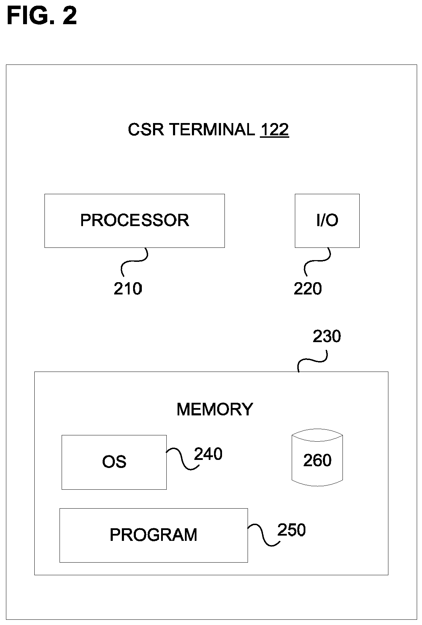

An exemplary embodiment of CSR terminal 122 is shown in more detail in FIG. 2. Web server 110, call center server 112, transaction server 114, automated assistant device 120, NLP device 124, merchant server 126 and/or user device 102 may have a similar structure and may include many components that are similar to or even have the same capabilities as those described with respect to CSR terminal 122. As shown, CSR terminal 122 may include a processor 210, an input/output ("I/O") device 220, a memory 230 containing an operating system ("OS") 240 and a program 250. For example, CSR terminal 122 may be a single device or server or may be configured as a distributed computer system including multiple servers, devices, or computers that interoperate to perform one or more of the processes and functionalities associated with the disclosed embodiments. In some embodiments, CSR terminal 122 may further include a peripheral interface, a transceiver, a mobile network interface in communication with the processor 210, a bus configured to facilitate communication between the various components of CSR terminal 122, and a power source configured to power one or more components of CSR terminal 122.

A peripheral interface may include hardware, firmware and/or software that enables communication with various peripheral devices, such as media drives (e.g., magnetic disk, solid state, or optical disk drives), other processing devices, or any other input source used in connection with the instant techniques. In some embodiments, a peripheral interface may include a serial port, a parallel port, a general purpose input and output (GPIO) port, a game port, a universal serial bus (USB), a micro-USB port, a high definition multimedia (HDMI) port, a video port, an audio port, a Bluetooth™port, a near-field communication (NFC) port, another like communication interface, or any combination thereof.

In some embodiments, a transceiver may be configured to communicate with compatible devices and ID tags when they are within a predetermined range. A transceiver may be compatible with one or more of: radio-frequency identification (RFID), near-field communication (NFC), Bluetooth™, low-energy Bluetooth™ (BLE), WiFi™, ZigBee™, ambient backscatter communications (ABC) protocols or similar technologies.

A mobile network interface may provide access to a cellular network, the Internet, a local area network, or another wide-area network. In some embodiments, a mobile network interface may include hardware, firmware, and/or software that allows the processor(s) 210 to communicate with other devices via wired or wireless networks, whether local or wide area, private or public, as known in the art. A power source may be configured to provide an appropriate alternating current (AC) or direct current (DC) to power components.

Processor 210 may include one or more of a microprocessor, microcontroller, digital signal processor, co-processor or the like or combinations thereof capable of executing stored instructions and operating upon stored data. Memory 230 may include, in some implementations, one or more suitable types of memory (e.g. such as volatile or non-volatile memory, random access memory (RAM), read only memory (ROM), programmable read-only memory (PROM), erasable programmable read-only memory (EPROM), electrically erasable programmable read-only memory (EEPROM), magnetic disks, optical disks, floppy disks, hard disks, removable cartridges, flash memory, a redundant array of independent disks (RAID), and the like), for storing files including an operating system, application programs (including, for example, a web browser application, a widget or gadget engine, and or other applications, as necessary), executable instructions and data. In one embodiment, the processing techniques described herein are implemented as a combination of executable instructions and data within the memory 230.

Processor 210 may be one or more known processing devices, such as a microprocessor from the Pentium™ family manufactured by Intel™ or the Turion™ family manufactured by AMD™. Processor 210 may constitute a single core or multiple core processor that executes parallel processes simultaneously. For example, processor 210 may be a single core processor that is configured with virtual processing technologies. In certain embodiments, processor 210 may use logical processors to simultaneously execute and control multiple processes. Processor 210 may implement virtual machine technologies, or other similar known technologies to provide the ability to execute, control, run, manipulate, store, etc. multiple software processes, applications, programs, etc. One of ordinary skill in the art would understand that other types of processor arrangements could be implemented that provide for the capabilities disclosed herein.

CSR terminal 122 may include one or more storage devices configured to store information used by processor 210 (or other components) to perform certain functions related to the disclosed embodiments. In some embodiments, CSR terminal 122 may include memory 230 that includes instructions to enable processor 210 to execute one or more applications, such as server applications, network communication processes, and any other type of application or software known to be available on computer systems. Alternatively, the instructions, application programs, etc. may be stored in an external storage or available from a memory over a network. The one or more storage devices may be a volatile or non-volatile, magnetic, semiconductor, tape, optical, removable, non-removable, or other type of storage device or tangible computer-readable medium.

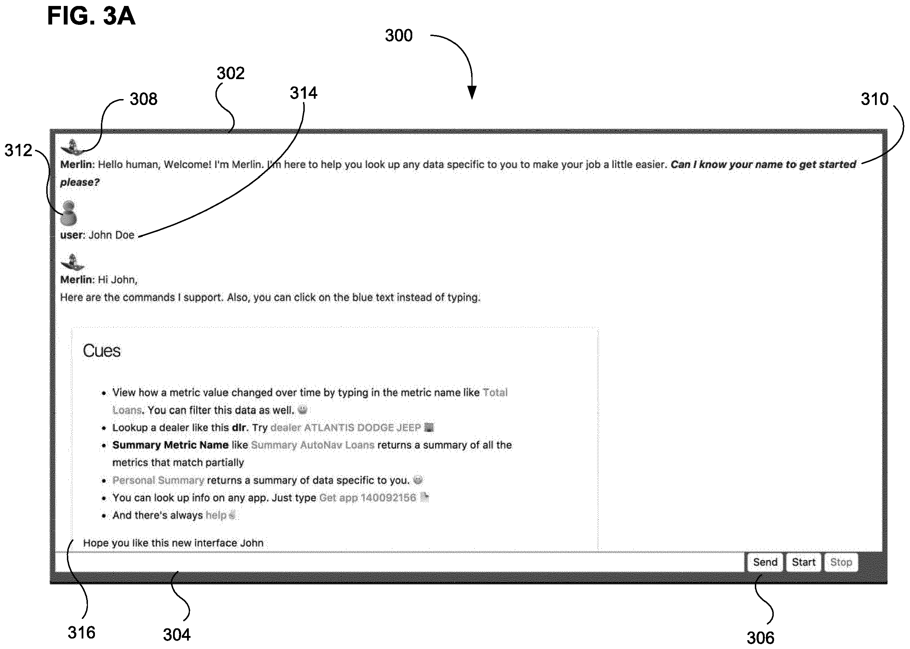

In some embodiments, CSR terminal 122 may include memory 230 that includes instructions that, when executed by processor 210, perform one or more processes consistent with the functionalities disclosed herein. Methods, systems, and articles of manufacture consistent with disclosed embodiments are not limited to separate programs or computers configured to perform dedicated tasks. For example, CSR terminal 122 may include memory 230 that may include one or more programs 250 to perform one or more functions of the disclosed embodiments. Moreover, processor 210 may execute one or more programs 250 located remotely from system 100. For example, system 100 may access one or more remote programs 250, that, when executed, perform functions related to disclosed embodiments. In some embodiments, CSR terminal 122 may include a program that when executed, generates a chat user interface for providing interactive data in real time, as described in greater detail below with respect to FIGS. 3A-K.

Memory 230 may include one or more memory devices that store data and instructions used to perform one or more features of the disclosed embodiments. Memory 230 may also include any combination of one or more databases controlled by memory controller devices (e.g., server(s), etc.) or software, such as document management systems, Microsoft™ SQL databases, SharePoint™ databases, Oracle™ databases, Sybase™ databases, or other relational or non-relational databases. Memory 230 may include software components that, when executed by processor 210, perform one or more processes consistent with the disclosed embodiments. In some embodiments, memory 230 may include a database 260 for storing related data to enable CSR terminal 122 to perform one or more of the processes and functionalities associated with the disclosed embodiments.

CSR terminal 122 may also be communicatively connected to one or more memory devices (e.g., databases) locally or through a network. The remote memory devices may be configured to store information and may be accessed and/or managed by CSR terminal 122. By way of example, the remote memory devices may be document management systems, Microsoft™ SQL database, SharePoint™ databases, Oracle™ databases, Sybase™ databases, or other relational or non-relational databases. Systems and methods consistent with disclosed embodiments, however, are not limited to separate databases.

CSR terminal 122 may also include one or more I/O devices 220 that may comprise one or more interfaces for receiving signals or input from devices and providing signals or output to one or more devices that allow data to be received and/or transmitted by CSR terminal 122. For example, CSR terminal 122 may include interface components, which may provide interfaces to one or more input devices, such as one or more keyboards, mouse devices, touch screens, track pads, trackballs, scroll wheels, digital cameras, microphones, sensors, and the like, that enable CSR terminal 122 to receive data from one or more users. CSR terminal 122 may include a display, a screen, a touchpad, or the like for displaying images, videos, data, or other information.

In exemplary embodiments of the disclosed technology, CSR terminal 122 may include any number of hardware and/or software applications that are executed to facilitate any of the operations. The one or more I/O interfaces may be utilized to receive or collect data and/or user instructions from a wide variety of input devices. Received data may be processed by one or more computer processors as desired in various implementations of the disclosed technology and/or stored in one or more memory devices.

As shown in **FIG. 3A to FIG. 3K****,** CSR terminal 122 may be configured to generate and/or display a chat user interface 300 for providing interactive data in real time. Chat user interface 300 may include a display window 302 for displaying messages and interactive data, and an input field 304 for enabling a user to input text via, for example, a user typing on a keyboard connected to CSR terminal 122. As shown, in some embodiments, display window 302 may display an ongoing conversation between a user and a chatbot. Accordingly, display window 302 may be configured to display system messages 310 that are automatically generated by system 100 (e.g., via automated assistant device 120), user messages 314 that are generated via user input, interactive real-time data requested by the user, or other data or information generated by the system, such as, for example, an instruction window 316 providing information about useful commands and shortcuts that may be used in conjunction with system 100 to elicit automatic responses, information, and/or interactive real time data. In some embodiments, system messages and interactive real-time data automatically posted to display window 302 by system 100 may be associated with a chatbot avatar 308 and user messages 314 may be associated with a user avatar 312 so that a user may easily visually distinguish between system messages 310 and user messages 314.

According to some embodiments, text input to the input field 304 may be submitted to system 100 for processing (e.g., to determine the meaning of the user submitted text and generate a response) in response to, for example, the system receiving an indication that a user has clicked on a "Send" button 306. According to some embodiments, in response to the selection of the "Send" button 306, text that has been input into input field 304 may then be processed by, for example, automated assistant device 120 and/or NLP device 124, and may also be displayed as a user message in display window 302. According to some embodiments, display window 302 may be configured to display the most recently submitted user message, system message, data, or other information at the bottom of display window 302 and push older content upwards. In some embodiments, display window 302 may include a scroll bar that may allow a user to scroll up to view older messages and data. As will be appreciated by those of skill in the art, display window 302 may include a scroll bar that enables a user to scroll up and view older messages and representations of data that have been displaced out of view by newer messages and data.

According to some embodiments CSR terminal 122 may display interactive real-time data stored by system 100. In some embodiments, CSR terminal 122 may store data that may be displayed by CSR terminal 122. In some embodiments, database 118, automated assistant device 120, web server 110, call center server 112, transaction server 114 and/or NLP device 124 may store interactive real-time data that may be displayed by CSR terminal 122. According to some embodiments, the data that is available to be displayed by CSR terminal 122 may be stored in a closed system, such as within organization 108. In other words, limiting the data that CSR terminal 122 may access for display to data that is stored by devices that are all controlled by an entity associated with organization 108 such that the data may not be deleted, added to, or modified by anyone who is not authorized by an entity associated with organization 108 may be beneficial in enabling the use of machine learning and natural language processing techniques to be more effectively used with the data. For example, automated assistant device 120 and/or NLP device 124 may utilize machine learning techniques to better understand what a particular salesperson or group of salespeople mean when a user message is processed by the system, without being influenced by examples created by people outside the controlled system. Further, storing the data in a closed system may allow users of system 100 to have better insights into the context and meaning of the data displayed by CSR terminal 122 because the closed system may enable the users to understand the domain of data that the system has access to. In some embodiments, CSR terminal 122 may be configured to display data or information sourced from outside of organization 108. For example, in some embodiments, CSR terminal 122 may display data or information received from merchant server 126, such as for example, information relating to auto loan applications associated with a dealership.

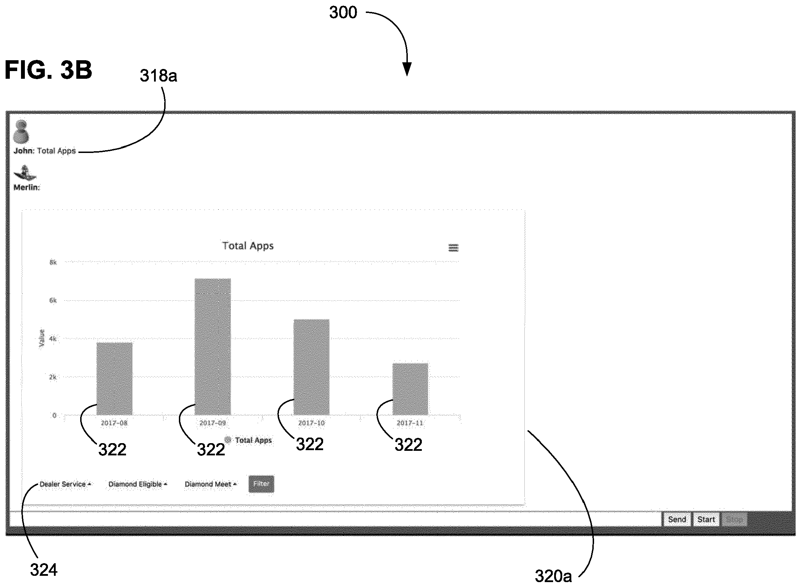

As shown in FIG. 3B, display window 302 may be configured to display data, such as a bar chart 320a. In some embodiments, display window 302 may be configured to present data in the form of graphs, charts, tables, pie charts, treemaps, line charts, scatter plots, area charts, steamgraphs, bubble charts, heatmaps, polar charts, pyramid charts, and the like. As will be understood by those of skill in the art, a bar chart 320a may include a plurality of bars 322, with each bar 322 representing an aggregated set of data. For example, a first bar 322 may represent the number of loan applications that were processed in a first month and a second bar 322 may represent the number of loan applications that were processed in a second month. According to some embodiments, data presented in display window 302 may be interactive, such that, for example, if a user wanted to view details of a portion of the aggregated data (e.g., view aggregated yearly data by month), system 100 may enable the user to manipulate the view of the data within display window 302. According to some embodiments, system 100 may allow a user to view details of a portion of the aggregated data by, for example, clicking on a portion of a graph, chart, or the like (e.g., selecting a bar of a bar chart, a line of a line chart, etc.) or by selecting an option from a dropdown menu 324. For example, in some embodiments, if the user is interested in viewing how many applications per week were processed in a first month, the user may be able to modify the data shown by display window 302 to show weekly data by, for example, double clicking on a first bar 322 of the bar chart 302a. In response to receiving an indication that the first bar 322 has been selected, CSR terminal 122 may cause the displayed bar chart 320a to change into a different bar chart showing a more detailed view of the data that was aggregated in the first bar 322, such as, for example, the application data shown on a weekly or daily basis. Further, in some embodiments, chat user interface 300 may enable a user to view a less detailed form of the data, by, for example, aggregating bars 322 of a bar chart 302a representing monthly data into new bars that represent quarterly or yearly data.

Chat user interface 300 may be advantageous because it may quickly provide a user with relevant data that is both up-to-date and interactive, allowing the user to quickly location relevant data and interact with the data to navigate to greater or lesser detail if desired. This may be particularly useful in the context of a sales call that may last a minute or less, where the accessing the relevant data quickly and in a way that a user can comprehend and use can be the difference between making a sale or not. Chat user interface 300 can quickly provide a user with relevant data on-demand by allowing the user to interact with the underlying systems (e.g., automated assistant device 120, NLP device 124) in natural language rather than through specialized commands, navigation and clicks that take extra time and may require additional training to use. In some embodiments, chat user interface 300 provides further advantages by preemptively providing a user with data before they have requested it, such as when the system determines the identify of an incoming caller or using artificial intelligence and/or machine learning techniques to predict what information a user may find useful to view in a given context (e.g., based on listening in on a call and determining the context of the call). Chat user interface 300 may allow a user to access all of their data in a single application by continuously updating its display, whereas a user might have to navigate between different applications to access their data in other systems. Chat user interface 300 may be personalized to the user (e.g. by setting preferences or using machine learning) to allow the user to view the data that is most relevant to them, which may reduce the burden of context switching and information overload that a user might otherwise experience.

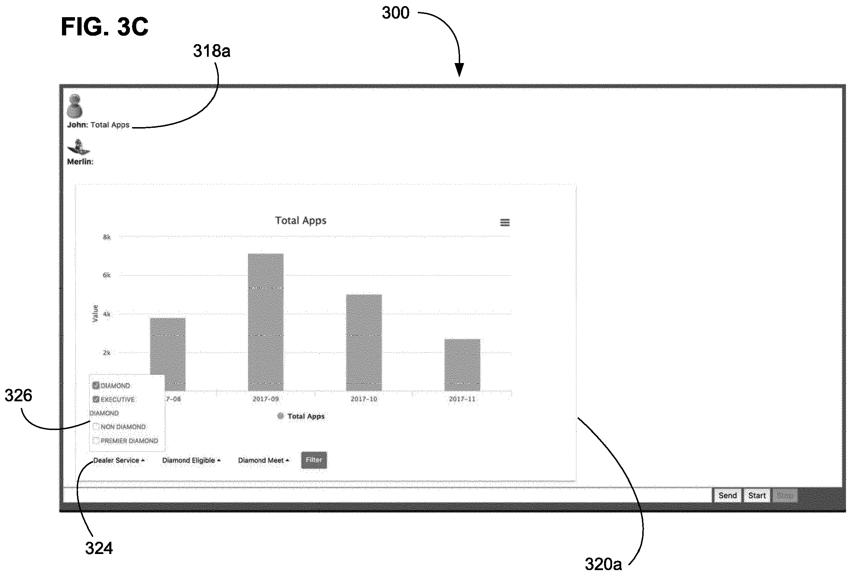

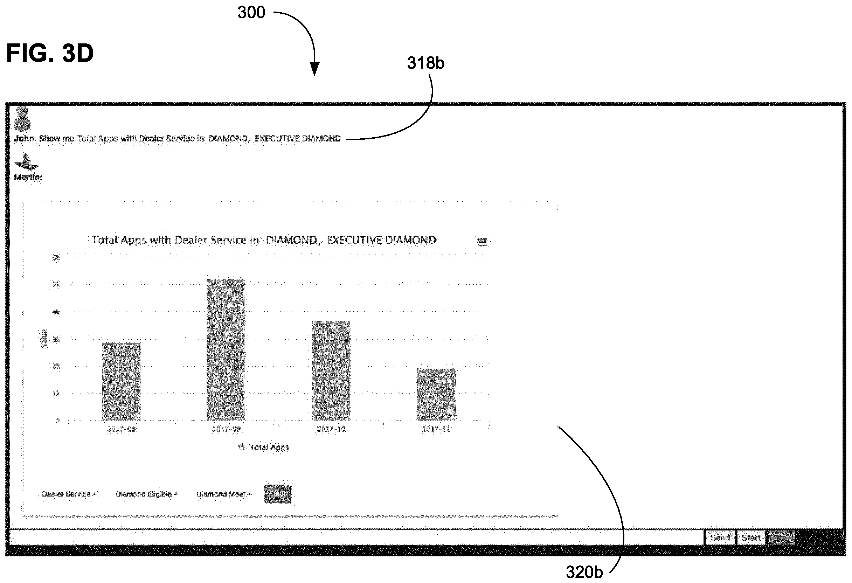

FIG. 3C and FIG. 3D show an example embodiment of a way in which a user may interact with or manipulate the view of the real-time data presented in bar chart 320a using drop down menu 324. Upon selection of drop down menu 324 by a user, system 100 may display a sub-menu 326 that provides selectable options. For example, as shown in the example embodiment in FIG. 3C, selection of the "Dealer Service" drop down menu 324 causes a sub-menu 326 to be displayed which lists various selectable options such as "Diamond," "Executive," "Non Diamond," and "Premier Diamond." According to some embodiments, drop down menus 324 and aspects of sub-menus 326 may be selected by a user by, for example, using a mouse connected to CSR terminal 122 to click on a button or selectable portion associated with drop down menu 324 or sub-menu 326. In some embodiments, system 100 may detect the selection of drop down menu 324 or one or more aspects of a sub-menu by detecting an oral statement or command from a user indicating such selections. In the example shown in FIG. 3C, the aspects "Diamond" and "Executive" have been selected from sub-menu 326 in association with drop down menu 324 relating to "Dealer Service," in bar chart 320a titled "Total Apps," which indicates that a user wishes to view the total number of applications meeting the diamond or executive classification under dealer service. In response to these selections and as shown in FIG. 3D, system 100 generates a new bar chart 320b for display by display window 302, showing the total number of applications with dealer service in diamond or executive diamond. According to some embodiments, display window 302 may display a user message 318b representing the nature of the request to display new bar chart 320b.

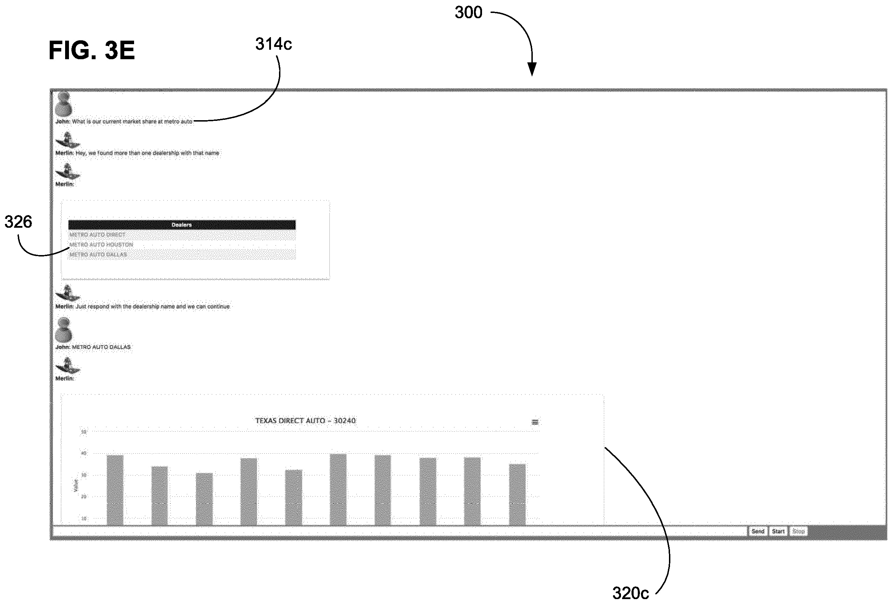

In some embodiments, user may request interactive real-time data by inputting a user message 314 that is representative of a query to system 100 by, for example, using input field 304 or speaking the query aloud so that it may be detected by a microphone associated with CSR terminal 122. As shown in FIG. 3E, in an illustrative embodiment, a user may input a user message 314c to system 100 that states "What is our current market share at metro auto." System 100 may process user message 314c as previously described in greater detail above (e.g., via NLP device 124 and/or automated assistant device 120), and may determine that there are multiple dealerships with the "metro auto name," and may provide a system message 310c providing the names of the dealerships that include "metro auto" in the name. The user may input a user message 314d in response, specifying the desired dealership, and system 100 may then display a bar chart 320c showing data representative of the current market share of the desired dealership.

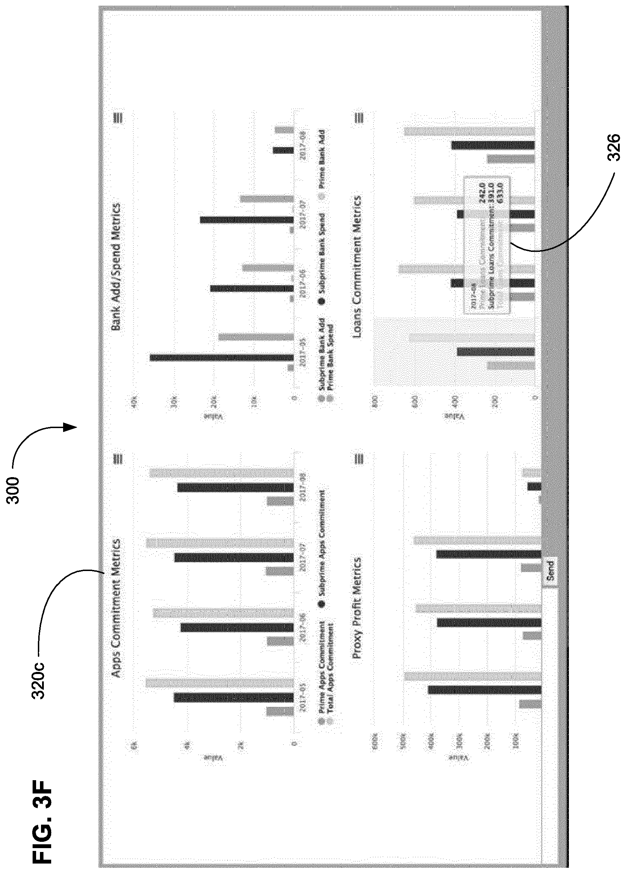

As shown in FIG. 3F, display window 302 may be configured to display multiple charts 320d or interactive data sets at once. According to some embodiments, display window 302 may be configured to detect a user input, such as for example, the position of a mouse pointer and/or click of a mouse, and determine that a user has selected a portion of the interactive real-time data. As described above, in some embodiments, following selection of a portion of the data, the portion of the data may be expanded to show a higher level of detail or contracted to aggregate the date into a lower level of detail. As shown in FIG. 3F, in some embodiments, system 100 (e.g., via automated assistant 120) may cause a pop-up box 326 containing data associated with a portion of the data to pop up in response to, for example, detecting that a mouse pointer is hovering over the portion of the interactive real-time data 320c. According to some embodiments, in response to detecting a selection of a portion of the data, system 100 (e.g., via automated assistant 120) may present one or more selectable data manipulation options via, for example, a drop-down menu. Data manipulation options may include for example, an option to show a more or less detailed version of the data, an option to enable the user to modify the data by adding, deleting or changing parts of the data, or the option to display related data.

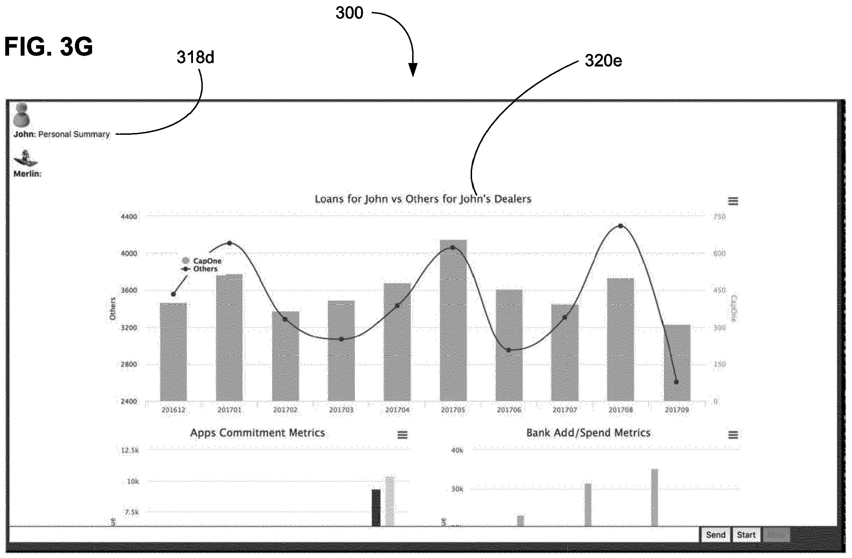

As shown in FIG. 3G, system 100 (e.g., via automated assistant device 120) may cause a personalized summary of data to be displayed via display window 302. According to some embodiments, before accessing chat user interface 300, a user of CSR terminal 122 may be required to submit login credentials via CSR terminal 122. Accordingly, in some embodiments, system 100 may store a user profile that may include the user's preferences, history, and data associated with the user. Thus, if system 100 receives a command message 318d or user request to display personalized data via a user input, then system 100 (e.g., via automated assistant device 120) may cause personalized data 320e that is associated with the particular user of CSR terminal 122 to be displayed.

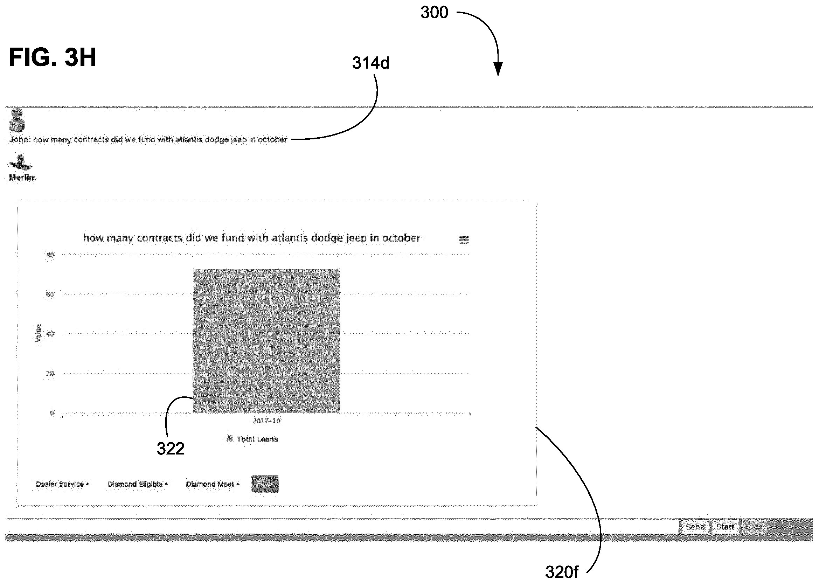

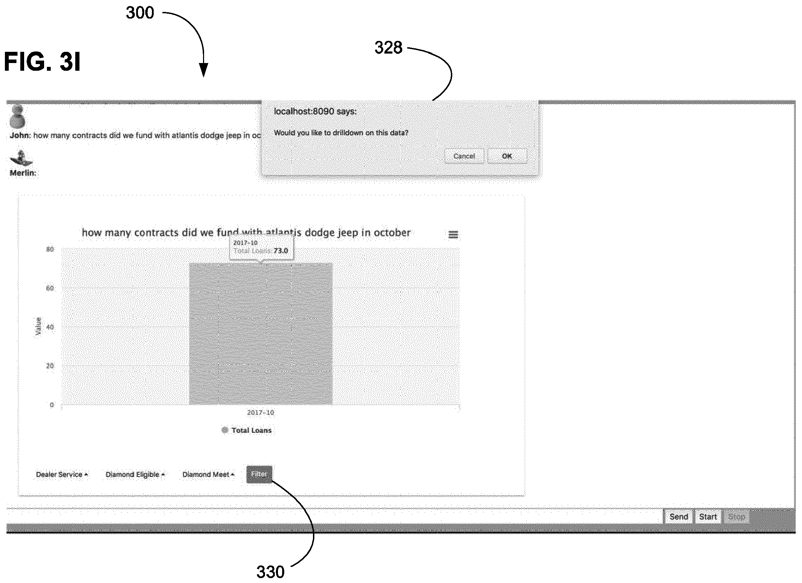

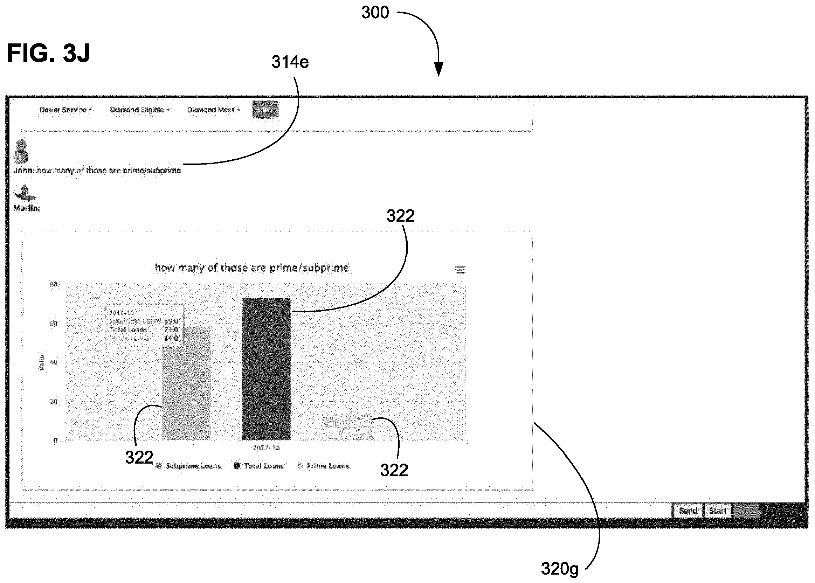

As shown in FIG. 3H to FIG. 3J, system 100 may provide a "drill down" functionality that may allow a user to interact with data displayed in display window 302 to show more or less detailed views of the data. In the illustrative embodiment shown in FIGS. 3H-3J, a user may input a user message 314d, stating "how many contracts did we fund with atlantis dodge jeep in October" and in response to the request, system 100 may display a bar chart 320f having one bar 322 representing the total number of loans funded with atlantis dodge jeep for October of the present year. In some embodiments, chat user interface 300 may present the user with an option of "drilling down" on the data shown in bar chart 320f, by for example, displaying a popup box 238 asking the user whether they would like to drill down on the data, as shown in FIG. 3I. According to some embodiments, chat user interface 300 may present an option to "drill down" in response to, for example, a user clicking on bar 322 of bar chart 320f, a user input typed into input field 304, a statement spoken by the user, or in response to selection of a "filter" button 330. In some embodiments, system 100 may not present an option to drill down, but may simply proceed with drilling down on the selected data in response to such a user input. According to some embodiments, after indicating a desire to drill down on the data, system 100 may receive an indication of how the user wants to drill down. For example, as shown in FIG. 3J, a user may input a user message 314e representative of a desire to know how many of the contracts are prime and how many are subprime. In response to the request to drill down, system 100 may generate a detailed chart 320g, that shows the data that was aggregated into one bar 322 in chart 320f split into three bars 322 that show the number of subprime loans, the number of total loans, and the number of prime loans, respectively. According to some embodiments, system 100 may generate a detailed chart in response to an indication of a user's request to drill down on the data without requiring the user to specify how the user wants to drill down. For example, system 100 may include some predetermined automatic drill down commands such as for example, a predetermined drill down command that automatically generates a new chart showing subprime loans and prime loans when a bar of a bar chart showing total contracts is clicked on by a user. It will be appreciated that the foregoing are merely examples and that many different types of predetermined drill down commands may be used in various embodiments and that a user may customize predetermined drill down commands to show the type of data they desire to see in response to, for example, clicking on a bar of a bar chart.

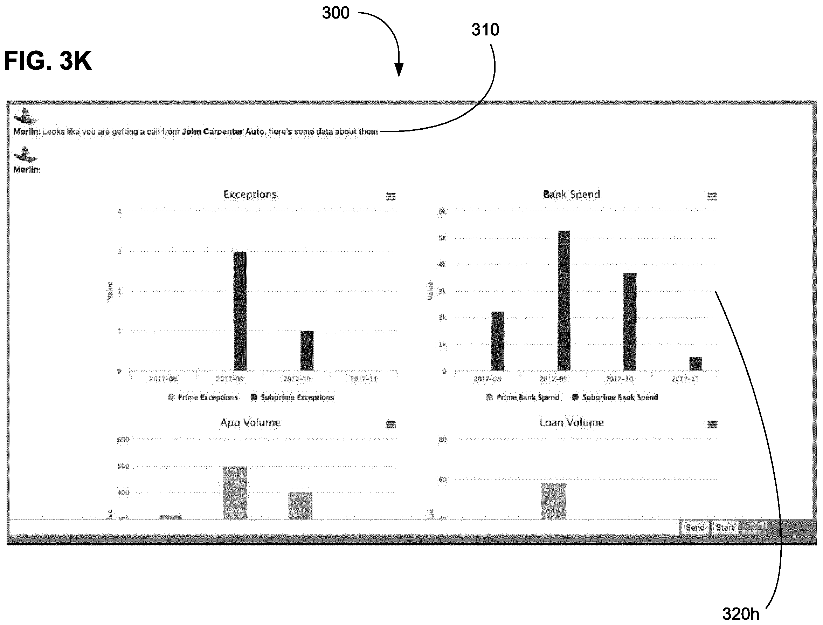

In addition to the "drill down" functionality, system 100 may also provide various other useful functionalities that may serve to aid a salesperson on a sales call by saving the salesperson time. For example, as described in greater detail below, system 100 may provide an autocomplete functionality that may generate suggested completions to partial text statements entered into input field 304. According to some embodiments, system 100 may provide an autocomplete function that may suggest the completion of information that is stored in association with a field of a database, such as, for example, a metric name, a dealer ID, a dealer name, an area sales manager ("ASM") name, a regional manager ("RM") name, or an application ID. Examples of metric names or metrics may include, for example, total applications, prime applications, subprime applications, proxy profit, bank spend, bank add, total loans, prime loans, subprime loans, prime applications commitment, subprime applications commitment, and the like. System 100 may provide a "notes tracking" functionality that may allow a user of CSR terminal 122 to input notes regarding sales or other business activities during a day. In some embodiments, chat user interface 300 may receive notes via an input field, such as input field 304, in which a user may input text to be saved by, for example database 118, for future access. For example, in some embodiments, a user may enter "Add Note Application needs review by supervisor to app id #1234567" in input field 304 to enter a note that is associated with application number 1234567 and indicates that the application needs to be reviewed by a supervisor. Thus, system 100 may provide a user with a quick and convenient way to add notes to an application or file without utilizing a different program or separate interface. As described in further detail below, system 100 may include a voice activation or voice-to-text functionality that may detect words spoken during an incoming phone call and retrieve pertinent data based on the words being spoken. For example, if a salesperson using system 100 is speaking with a car dealership via an incoming call, system 100 may listen to the call and retrieve, for example, pertinent dealership information or loan application information. Such voice-activation may allow a user to access chat user interface 300 on the go. For example, a user may access chat user interface 300 via a user device 102, such as a mobile phone, to assist with taking a sales call when the user is driving for example. Further, as shown by the illustrative example in FIG. 3K, system 100 may determine the identity of an incoming caller based on caller ID information, and may automatically display information relating to the incoming caller. For example, if the incoming caller is a car dealership, the system (e.g., via CSR terminal 122) may automatically display a profile of the dealership, loan applications in process for the dealership, and/or information regarding known issues or problems with loan applications, so that a salesperson may be immediately ready to address the concerns of the dealership upon answering the call. As shown in the example in FIG. 3K, upon identifying the incoming caller, chat user interface 300 may display system message 310 that identifies the incoming caller, and may further display one or more interactive real-time charts 320h associated with the identified incoming caller. System 100 may further include a real-time reporting functionality that may automatically update metrics (e.g., total applications, prime applications, subprime applications, etc.) in response to certain real-world actions. For example, a correction to a loan application may affect a salesperson's metrics. For example, a salesperson may reach an agreement on the terms of a loan application with a dealership and having completed their job, the salesperson may forward the loan application to a funding department, which may find discrepancies in the loan application, such as a missing income statement, a mismatched social security number, or the like, and the loan application may be rejected or sent back to the salesperson to make revisions. Thus, it is possible that even after having completed their task, a salesperson's metrics may need to be adjusted. Such events and/or corrections may traditionally not be reflected in the data until the next day, but system 100 may capture the event (i.e., the discrepancy in the loan application) in real time and automatically update the data to provide salespeople with a more accurate view of the data when attempting to make sales. Further, as described in greater detail below, system 100 may provide a monitoring and alert functionality that may allow users to set up alerts that may trigger when specified conditions are met.

Further, in some embodiments, system 100 may provide a recommendation function that may utilize artificial intelligence and/or machine learning techniques to provide recommendations to a user of system 100 on which future tasks to perform next, based on the priority or importance of the task. In some embodiments, system 100 (e.g., automated assistant device) may access different sources of data, such as internal databases or external data (e.g., weather data, foot traffic data) accessed via one or more APIs and to run various supervised and unsupervised machine learning models on the data to identify causal or correlated relationships between data sets and trends. For example, such machine learning models may determine that there is a decrease in expected loan applications at a dealership when the weather meets certain conditions. Insights provided by the machine learning models may be presented as actionable items in an intelligent recommendation queue to a user of chat user interface 300.

As will be appreciated by those of skill in the art, system 100 (e.g. via automated assistant device) may generate tasks/recommendations based on the machine learning models, which may be updated at regular intervals (e.g., monthly) and based on real-time events and conditions. For example, if, based on a machine learning model, system 100 predicts that under current conditions, a financial organization should close 50 loan applications per month with a particular dealership, but if the real-time data indicates that the organization is only on pace for closing 30 loan applications with that dealership in the current month, system 100 may generate a recommendation to a salesperson to increase their sales efforts with that dealership and place the recommendation in the recommendation queue.

Thus, according to some embodiments, system 100 may include an artificial intelligence-based task queue (e.g., managed by automated assistant device 120) for storing recommendations for display to a user of chat user interface 300. In other words, system 100 may utilize artificial intelligence techniques to fill a recommendation queue with tasks that represent recommendations for actions to be taken by a user of system 100. For example, based on historical data, system 100 may know that if a particular dealership has a sales event, then the entity associated with organization 108 will typically close 100 loans a month with that dealership. If system 100 knows that the dealership is currently having a sales event this month but the entity associated with organization 108 is not on pace to reach the expected 100 loans, system 100 may create a task and place it in the task queue. The task may represent a recommendation for a user to call the dealership to attempt to make sales of loans. In some embodiments, system 100 may display a recommendation to a user of system 100 based on one or more tasks in the task queue. For example, in some embodiments, a user may input a user message such as "What should I do next?" into input field 304 and upon submitting the user message, automated assistant device 120 may process the user message and respond by displaying one or more recommended actions from the recommendation queue in display window 302.

In some embodiments, system 100 may assign a priority to each task/recommendation in the recommendation queue based on predetermined rules, weights or values that are, for example, input by a user. For example, predetermined rules may indicate that closing a loan with dealership X is more highly valued than closing a loan with dealership Y, and thus system 100 may more highly prioritize the processing of a loan application for dealership X over dealership Y. According to some embodiments, tasks may be ordered in the recommendation queue based on their assigned priority. In some embodiments, chat user interface 300 may include a window that displays the recommendation list so that a user can always view one or more of the highest priority recommended tasks. In some embodiments, system 100 (e.g., via automated assistant device 120) may determine that a user has performed a task by monitoring calls made by the user via web server 110 to determine, for example, that a salesperson has called a particular dealership. In some embodiments, system 100 may determine that a user has performed a particular task by monitoring information input into chat user interface 300 that satisfies the task, such as for example, processing a particular loan application. After determining that a task has been performed by the user, automated assistant device may remove the task from the queue and/or reorder the priority of the task to place it lower in the queue.

In some embodiments, automated assistant device may generate recommendations based on changing data and as the data changes in real-time system 100 may adjust the priority of the tasks in the task queue, thereby changing the priority of recommendations presented to a user of chat user interface 300. System 100 may generate tasks based on events, such as sales held by dealerships or increased volume of customers at a particular dealership. According to some embodiments, system 100 may know when a dealership is having a sale because the entity associated with organization 108 is sponsoring the sale. In some embodiments, system 100 may detect how busy a particular location or business is based on data received from third party API's that track how busy a location or business is. In some embodiments, system 100 (e.g., via web server 110) may intermittently search or scan the internet to collect data (e.g., notifications of dates of sales by particular vendors) that may be used by system 100 in generating recommendations. Thus, as known conditions (e.g., a sale being held by a dealership, increased or decreased traffic at a particular dealership, etc.) change, system 100 may change the tasks or recommendations presented to a user of chat user interface 300 so that the user may, in real time, focus their efforts in a way that is more likely to yield positive results (e.g., increased sales) because on current conditions. Thus, in some embodiments, through the use of an artificial intelligence-based task queue, system 100 may be configured to make recommendations to salespeople in real time based on real time events or conditions such as sales and/or increased customer presence at a business.

While web server 110, call center server 112, transaction server 114, automated assistant device 120, CSR terminal 122, NLP device 124, and merchant server 126 have been described as one form for implementing the techniques described herein, those having ordinary skill in the art will appreciate that other, functionally equivalent techniques may be employed. For example, as known in the art, some or all of the functionality implemented via executable instructions may also be implemented using firmware and/or hardware devices such as application specific integrated circuits (ASICs), programmable logic arrays, state machines, etc. Furthermore, other implementations of the web server 110, call center server 112, transaction server 114, automated assistant device 120, CSR terminal 122, NLP device 124, or merchant server 126 may include a greater or lesser number of components than those illustrated. Further, although the embodiments above generally describe display of chat user interface 300 on CSR terminal 122, it should be appreciated that chat user interface 300 may be displayed by user device 102, such as a smartphone, and that a customer service representative may access system 100 remotely via a mobile device.

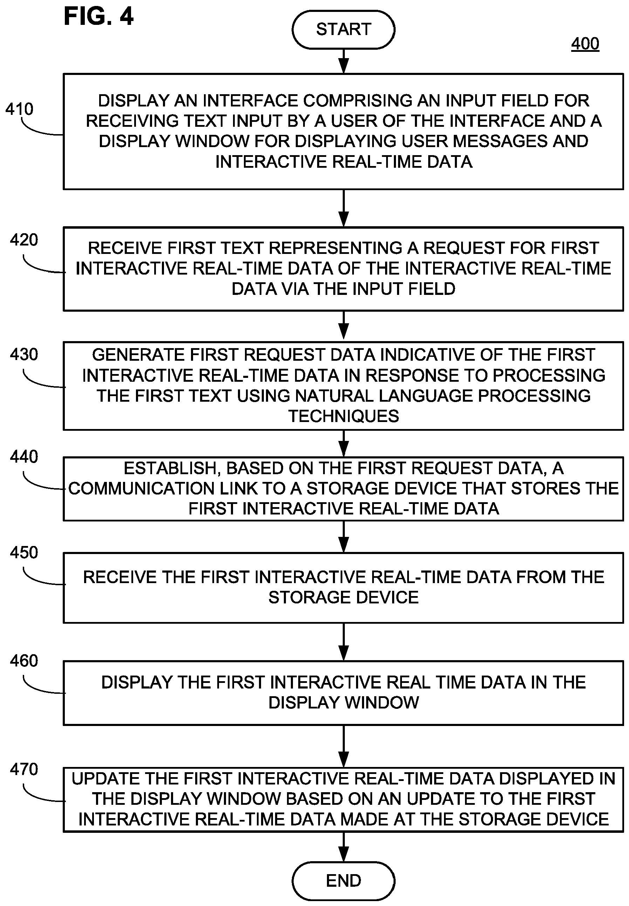

FIG. 4 shows a flowchart of a method 400 for providing interactive data in real time via an automated assistant. The interactive data is provided within a user interface, which in some embodiments may be within a chat user interface. Method 400 may be performed by a system including some or all of web server 110, call center server 112, transaction server 114, database 118, automated assistant device 120, CSR terminal 122, NLP device 124, user device 102, and merchant server 126.

The following "blocks" represent structures or functions and not necessarily require block form/shape. They may be implemented as programs, sub programs or devices, such as ASICs, and not limited in understanding to hardware, firmware, a combination of hardware and software, software, or software in execution.

In block 410, the system (e.g., via an electronic display of CSR terminal 122) may display chat user interface 300 comprising input field 304 for receiving text input by a user of chat user interface 300 and display window 302 for displaying user messages and interactive real-time data. According to some embodiments, user messages may be generated via the received text input. For example, a user of CSR terminal 122 may input text into input field 304 and select a "Send" button 306 to generate a user message. According to some embodiments, display window 302 may be configured to display system messages that are automatically generated by a computing system. For example, system messages may be automatically generated by, for example, automated assistant device 120 and/or NLP device 124. Likewise, display window 302 may display interactive real-time data in the form of, for example, bar charts, line graphs, tables, pie charts, treemaps, line charts, scatter plots, area charts, steamgraphs, bubble charts, heatmaps, polar charts, pyramid charts, and the like. In some embodiments, the system (e.g., via web server 110) may receive caller ID information associated with an incoming phone and determine, based on the caller ID information, the identity of a merchant associated with the incoming phone call. For example, web server 110 may identity that a particular car dealership is calling a salesperson associated with an entity, such as a financial services provider, that is associated with organization 108. The system (e.g., via CSR terminal 122) may display merchant information via display window 302 based on the identity of the merchant. For example, display window 302 may automatically display the name of the incoming caller or business and current or past sales data relating to the incoming caller. In some embodiments, chat user interface 300 may be initiated, loaded, and/or displayed in response to detecting an incoming call and identifying the incoming caller. According to some embodiments, the identity of the incoming caller may be received by automated assistant device 120 and/or NLP device 124 to be used in determinations of the meanings of customer messages and the determination of which data may be displayed at CSR terminal 122 in response to user requests.

In block 420, the system (e.g. automated assistant device 120) may receive, via input filed 304, first text representing a request for first interactive real-time data of the interactive real-time data. For example, a user may type and submit a user message via input field 304 that says "show me total applications" to request data representing the total number of loan applications over a particular time period. According to some embodiments, CSR terminal 122 may transmit the user message to automated assistant device 120 and/or NLP device 124 for processing. According to some embodiments, in addition to typing text into input field 304, text may also be entered in response to detection of orally spoken words. For example, in some embodiments, an audio sensor in communication with system 100 may detect words spoken by the user of chat user interface 300 and may automatically enter text representative of one or more of the words spoken by the user into input field 304 in response to performing a voice-to-text analysis (e.g., via automated assistant device 120).

In block 430, the system (e.g. automated assistant device 120) may generate first request data indicative of the first interactive real-time data in response to processing the first text using natural language techniques. For example, NLP device 124 may receive a user message that says "show me total applications" and using natural language processing techniques, NLP device 124 may generate request data that represents a request for data pertaining to the total number of loan applications processed for a particular dealership over a specified period of time, such as, for example, all loan applications for a particular Jeep dealership over the past year. In some embodiments, the dealership may be identified by automated assistant device 120 based on previous user messages submitted during the conversation or by identifying the dealership from caller ID information associated with an incoming call. According to some embodiments, NLP device 124 may transmit the request data to automated assistant device 120 for execution of the request.

In block 440, the system (e.g. automated assistant device 120) may establish a communication link to a storage device (e.g., database 118) that stores the first interactive real-time data. In some embodiments, establishing a communication link may be based on the first request data. For example, automated assistant device 120 may receive request data from NLP device 124, wherein the request data represents a request for, for example, all loan applications for a particular Jeep dealership over the past year, and automated assistant device 120 may establish a communication link to, for example, database 118 that stores the loan application data for the particular Jeep dealership. In some embodiments, automated assistant device 120 may establish a link between the storage device that stores the requested data and CSR device 122 that displays the data via chat user interface 300.

In block 450, the system (e.g. automated assistant device 120) may receive the first interactive real-time data from the storage device. For example, in some embodiments, automated assistant device 120 may receive the first interactive real-time data from the storage device. In some embodiments, CSR terminal 122 may receive the first interactive realOtime data from the storage device.

In block 460, the system (e.g. CSR terminal 122) may display the first interactive real-time data in display window 302. For example, display window 302 may display the first interactive real-time data as an interactive chart, graph, table, or other such common data format that represents the requested first interactive real-time data. In some embodiments, one more portions of the displayed first interactive real-time data may be selected or manipulated as described previously in this disclosure to, for example, view more or less detail of the represented data, view other associated data, or input, add, or delete data.

In block 470, the system (e.g. automated assistant device 120) may update the first interactive data real-time data displayed in display window 302 based on an update to the first interactive real-time data made at the storage device. For example, if the first interactive real-time data is a chart showing the total number of loan applications processed in relation to a particular dealership by month and a new loan application for the dealership was just processed and added to the system, causing the total number of processed loan applications for the current month to increase by one, system 100 may update the stored value of loan applications for the current month to update at the storage device (e.g., database 118), and system 100 (e.g., via automated assistant device 120) may then automatically cause the interactive real-time data displayed in display window 302 to similarly update. Thus, in this case, if a user is viewing a bar chart showing loan applications by month, the last bar of the bar chat which represents the current month may automatically increase by one unit in response to an update at the storage device.

According to some embodiments, system 100 may automatically update data displayed in display window 302 in response to long polling performed by the device that displays display window 302 (e.g., CSR terminal 122, user device 102). For example, if a user is viewing chat user interface 300 on CSR terminal 122 and the data displayed by display window 302 is stored by database 118, then in some embodiments, CSR terminal 122 may intermittently ping database 118 for updates in the data. According to some embodiments, the source of the stored data (e.g., database 118) may intermittently push updates to the display device (e.g., CSR device 122) that is displaying the data via display window 302. The ability to provide real-time data via the display window 302 is advantageous because, for example, sales calls are made in real time and having the most up to date data may be the difference between making a sale or not making a sale. For example, in some embodiments, a "bank" metric may be associated with a relationship manager (RM), which may indicate an amount of money that an RM is allocated to spend per month. When a new auto loan application is filed by a dealership, the loan application may have an initial set of terms (e.g., APR, fees, etc.), but an RM may have the power to adjust the terms to make the deal more attractive to the dealership, by using allotted funds associated with the "bank" metric. In conventional systems, the "bank" metric may be updated once every 24 hours, which means that RMs are likely making decisions based on old data, which may cause them to be more cautious about adjusting loan terms to make sales, as they may perceive the value of the allotted funds associated with the "bank" metric to be less than it really is, which may cause them to miss a sale. However, because system 100 can provide an RM with real-time data, the RM will know the displayed value of the "bank" metric is accurate, which may allow the RM to be more aggressive in closing deals by being confident that they will not exceed the amount of funds allotted in association with the "bank" metric.

According to some embodiments, a method may include receiving a user input indicative of a command to display a more detailed view of a portion of the interactive real-time data. For example, if the interactive real-time data is being displayed via display window 302 as an interactive real-time chart, system 100 (e.g., via automated assistant device 120) may receive a user input indicative of a command to display a more detailed view of a portion of the interactive chart. In some embodiments, a user input indicative of a command may be, for example, a mouse click on a bar of the interactive bar chart displayed via display window 302, a spoken voice command, a text command input into input field 304, or any other form of input that may be interpreted as a command by a computing device. In response to the user input, automated assistant device 120 may receive an indication of the selection of the bar, which represents a portion of the interactive bar chart. In response to receiving the command to display a more detailed view of the portion of the interactive real-time chart, automated assistant device 120 may cause a more detailed view of the selected portion of the interactive real-time chart to be displayed via display window 302. For example, automated assistant device 120 may generate a new more detailed interactive bar chart that depicts, for example, multiple bars representative of the data represented by the selected bar of the original interactive bar chart. For example, if a first interactive bar chart displays bars corresponding to the number of applications by year, a user may select a bar representing a particular year and the system may generate a new chart that shows, for example, bars corresponding to the number of applications for each month of the selected year.

In some embodiments, a method may include receiving second text representing a request for second interactive real-time data of the interactive real-time data, determining an autocomplete suggestion for further text to complete the second text based on the second text, historical data, and the identification of the merchant, and displaying the autocomplete suggestion via input field 304. In some embodiments, the autocomplete suggestion may be selectable. For example, if a user types "show me to" into input field 304, the system (e.g., via automated assistant device 120) may generate an autocomplete suggestion that fills in the remainder of the message to read "show me total applications" which may be selected by the user to indicate an acceptance of the suggestion. In some embodiments, the system may display a plurality of selectable autocomplete suggestions for the user to choose from. In some embodiments, in response to being selected, the system may automatically enter the autocomplete suggestion into input field 304.

In some embodiments, the system (e.g. via automated assistant device 120) may automatically suggest data or other information to be displayed to a user of CSR terminal 122 based on, for example, the identity of the merchant, the interactive real-time data previously displayed via display window 302 in association with in incoming phone call, and historical data such as the type of data the user has requested in the past (e.g., patterns of requests) and the type of data that has been requested by anyone with respect to a particular merchant that has been identified as the merchant associated with an incoming call. As described above, automated assistant device 120 may utilize machine learning techniques to determine suggestions of data that a user may find useful to view and may make suggestions based on those determinations. Thus, in some embodiments, a method may include displaying a first system message representing a suggestion to display new interactive real-time data and receiving text representing a response to the suggestion via input field 304. The text representing a response to the suggestion may be processed by the system (e.g., via NLP device 124) to understand its meaning and the system may determine that the response indicates the user's acceptance of the suggestion. Based on the determination that the user has accepted the suggestion, the system (e.g., via automated assistant device 120) may cause CSR terminal 122 to display the new interactive real-time data via display window 302. In some embodiments, instead of typing a response, a user may input a response to a suggestion by, for example, clicking on a checkbox or other selectable input presented by the system.

For example, the system may display a system message stating "Would you like to view application data for 2016?" and the user may respond in the affirmative by typing "yes" in input field 304 or selecting a "yes" checkbox presented by chat user interface 300 in association with the system message.

In some embodiments, system 100 may enable users to set up alerts that will trigger upon the occurrence of some condition. Accordingly, in some embodiments, a method may include receiving a user input representative of a request to create an alert associated with the interactive real-time data, wherein the alert is configured to be triggered upon the occurrence of a specific condition. For example, in some embodiments, chat user interface 300 may provide an alert user interface that enables a user to input the condition(s) that when satisfied will trigger an alert notification to be displayed, for example, via chat user interface 300. Once an alert has been created, the system (e.g., via automated assistant device 120) may monitor the interactive real-time data to detect the specified condition(s) and in response to detecting the specified condition(s) may display an indication that the alert has been triggered via for example, display window 302. In some embodiments, the system may also display interactive real-time data associated with the alert. For example, if a user sets an alert having a specified condition that total loan applications for a specified dealership are greater than 100, then the system may monitor the number of total loan applications associated with the specified dealership and upon detecting that there are more than 100 loan applications, the system may then display a notification that the condition has been met and may optionally automatically display data associated with the alert, such as, for example, a chart showing the number of applications associated with the specified dealership.

According to some embodiments, system 100 may be used to process loan applications, some of which may include "Specialty Funding" applications that may require a different type of processing than other applications (e.g., they may require same day processing). Accordingly, in some embodiments, system 100 may enable a user to set up an alert associated with a specialty application that indicates a status change in the application so that the user may process the specialty application immediately in response to the status change.

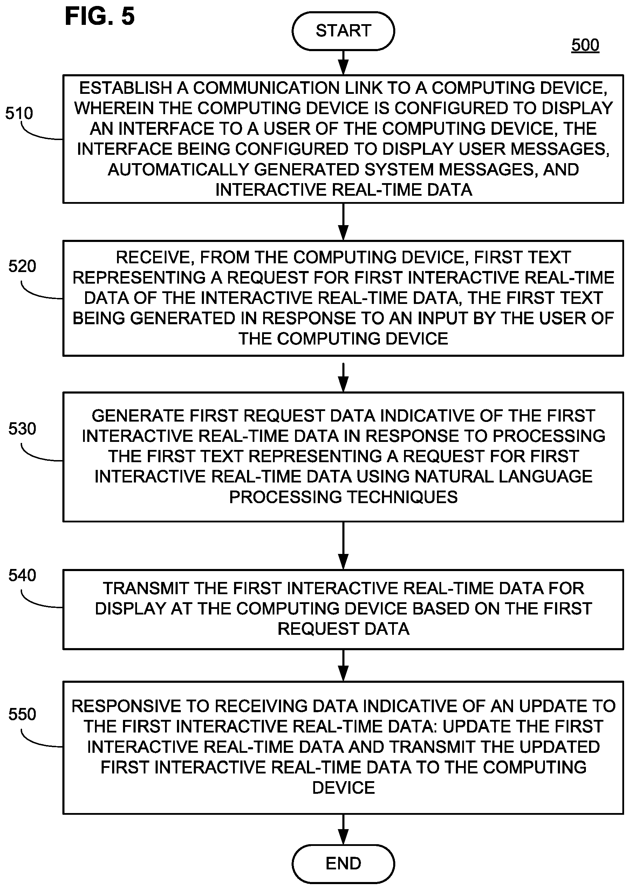

FIG. 5 shows a flowchart of a method 500 for providing interactive data in real time via an automated assistant for display via a user interface. In some embodiments, the user interface may be a chat user interface. Method 500 may be performed by a system including some or all of web server 110, call center server 112, transaction server 114, database 118, automated assistant device 120, CSR terminal 122, NLP device 124, user device 102, and merchant server 126.

In block 510, the system (e.g. automated assistant device 120) may establish a communication link to a computing device such as CSR terminal 122 that is configured to display a user interface, such as chat user interface 300, for example. As described above, chat user interface 300 may be configured to display user messages, automatically generated system messages, and interactive real-time data.

In block 520, the system (e.g. automated assistant device 120) may receive first text representing a request for first interactive real-time data of the interactive real-time data. In some embodiments, the first text may be received from the computing device that is configured to display chat user interface 300. In some embodiments, the first text may be generated in response to an input by the user of the computing device. For example, a user of CSR terminal 122 may input text into input field 304 of chat user interface 300 and cause the text to be transmitted to automated assistant device 120 in response to selection of, for example, "Send" button 306.

In block 530, the system (e.g. automated assistant device 120) may generate first request data indicative of the first interactive real-time data in response to processing the first text representing the request for first interactive real-time data using natural language processing techniques. For example, automated assistant device 120 may transmit the first text representing the request for first interactive real-time data to NLP device 124 for processing using natural language processing techniques and may then receive data from NLP device 124 indicating what the determined meaning of the first text is. Based on the determined meaning, automated assistant device 120 may generate first request data that represents a request to retrieve the first interactive real-time data for display by chat user interface 300.

In block 540, the system (e.g. automated assistant device 120) may transmit the first interactive real-time data for display at the computing device (e.g., CSR terminal 122) based on the first request data. For example, automated assistant device 120 may access the first interactive real-time data in memory and transmit the first interactive real-time data to CSR terminal 122 via the previously established communication link. CSR terminal 122 may display the first interactive real-time data in display window 302 of chat user interface 300. According to some embodiments, automated assistant device 120 may transmit the first interactive real-time data for display at the computing device by transmitting instructions to display the first interactive real-time data in the form of a first interactive real-time chart. In some embodiments, system 100 (e.g., via automated assistant 120) may receive an indication of a command to display a more detailed view of a selected portion of the first interactive real-time chart from, for example CSR terminal 122.

Automated assistant 120 may retrieve, based on the command, more detailed data associated with the selected portion of the first interactive real-time chart and may transmit instructions to display the more detailed data associated with the selected portion of the first interactive real-time chart in the form of a detailed interactive real-time chart, wherein the detailed interactive real-time chart may display details of data that was displayed in an aggregate form in the first interactive real-time chart.

For example, a more detailed interactive real-time chart may display data on a daily, weekly, or monthly basis as compared to a less detailed interactive real-time chart which may display data on a yearly basis. According to some embodiments, some or all of the data making up the first interactive real-time data transmitted by automated assistant device 120 to CSR terminal 122 may be stored on a server associated with the merchant or customer, such as merchant server 126. Accordingly, in some embodiments, automated assistant device 122 may receive data from merchant server 126 and transmit the data to CSR terminal 122 as part of the interactive real-time data.

In block 550, the system (e.g. automated assistant device 120) may, in response to receiving data indicative of an update to the first interactive real-time data, update the first interactive real-time data and transmit the updated first interactive real-time data to the computing device. For example, in some embodiments, if an update is made to the first interactive real-time data on automated assistant device 120, automated assistant device 120 may then transmit the updated first interactive real-time data to CSR terminal 122, so that the display of the first interactive real-time data may be updated by CSR terminal 122.

According to some embodiments, the method may further include receiving caller ID information associated with an incoming phone call, determining the identity of a merchant associated with the incoming phone call based on the caller ID information, retrieving merchant information based on the determined identity of the merchant, and transmitting the merchant information to the computing device for display in a manner similar to that previously described above. In some embodiments, the method may further include storing, by automated assistant device 120 for example, historical data relating to previous interactions the user of the computing device has had with chat user interface 300, wherein the previous interactions may include types of data that have been previously requested by the user for display by the computing device in relation to a particular merchant or merchant type. In some embodiments, automated assistant device 120 may generate a recommendation for specific interactive real-time data to display to the user based on the identity of the merchant associated with the incoming phone call and the historical data. Automated assistant device 120 may further transmit the recommendation to the computing device (e.g., CSR terminal 122), and in response to receiving an indication of acceptance of the recommendation, automated assistant device 120 may transmit the specific interactive real-time data to the computing device for display.

As described above, automated assistant device 120 may utilize machine learning techniques to determine what data is likely to be requested by a particular user or in relation to a particular merchant and may automatically generate a recommendation that is presented to the user to provide the user with the option to retrieve the recommended data before the user specifically requests it on their own.

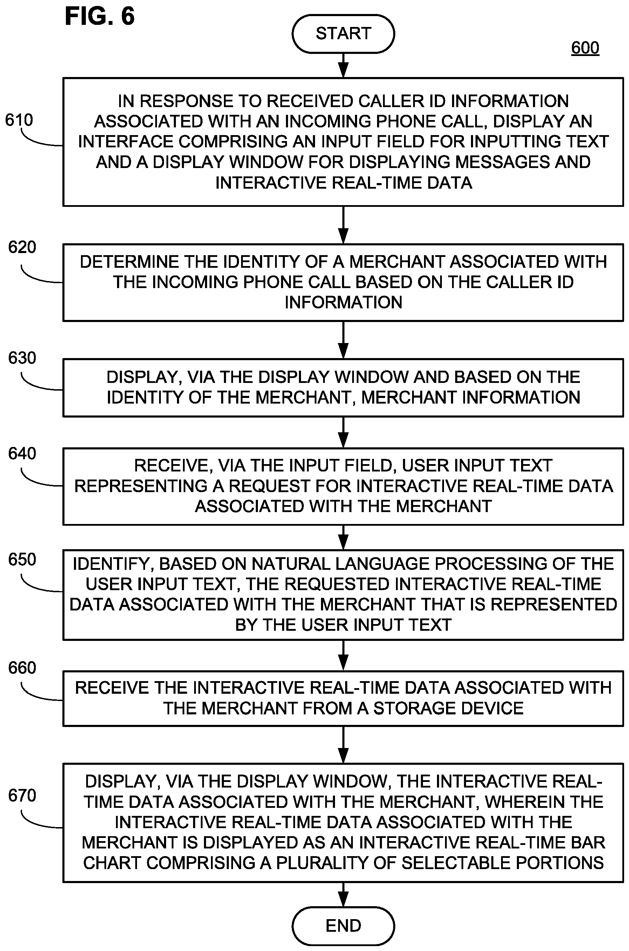

FIG. 6 shows a flowchart of a method 600 for providing interactive data in real time via an automated assistant. In some embodiments, the interactive data may be provided within a chat user interface. Method 600 may be performed by a system including some or all of web server 110, call center server 112, transaction server 114, database 118, automated assistant device 120, CSR terminal 122, NLP device 124, user device 102, and merchant server 126.

In block 610, the system (e.g. CSR terminal 122) may display chat user interface 300 that may include input field 304 for inputting text or receiving text input from a user and display window 302 for displaying messages and interactive real-time data. According to some embodiments, CSR terminal 122 may display chat user interface 300 in response to receiving caller ID information associated with an incoming phone call. For example, in some embodiments, if the system detects an incoming phone call (e.g., via call center server 112), then CSR terminal 122 may load chat user interface 300 in response to receiving data indicative of the incoming call.

In block 620, the system (e.g., via call center server 112) may receive caller ID information associated with the incoming phone call. For example, the caller ID information may indicate the number the incoming phone call is originating from, a name of a person associated with the phone number, and/or the number of an organization associated with the incoming phone call.

In block 630, the system (e.g., via call center server 112) may determine, based on the caller ID information, the identity of a merchant or customer associated with the incoming phone call.

In block 640, the system (e.g., via CSR terminal 122) may display merchant information via display window 302 based on the identity of the merchant or customer associated with the incoming call. For example, merchant information may include the name, phone number, address, or previous transaction/sales data associated with the merchant or customer that is associated with the incoming call.

In block 650, the system (e.g., via CSR terminal 122) may receive, for example via input field 304, user input text representing a request for interactive real-time data associated with the merchant or customer.

In block 660, the system (e.g., via NLP device 124) may identify the requested interactive real-time data associated with the merchant or customer that is represented by the user input text based on natural language processing of the user input text.

In block 670, the system (e.g., CSR terminal 122) may receive the interactive real-time data associated with the merchant or customer from a storage device, such as database 118 for example. In some embodiments, automated assistant device 120 may retrieve the interactive real-time data associated with the merchant or customer and may transmit the interactive real-time data to CSR terminal 122.

In block 680, the system (e.g., CSR terminal 122) may display the interactive real-time data associated with the merchant or customer via display window 302. In some embodiments, the interactive real-time data may be displayed as an interactive real-time bar chart comprising a plurality of selectable portions. In some embodiments, the interactive real-time bar chart may include a first selectable portion that is configured to display a pop-up window showing further data when selected. In some embodiments, the interactive real-time bar chart may include a second selectable portion associated with a bar of the interactive real-time bar chart. According to some embodiments, the system may display a detailed interactive real-time bar chart in response to receiving a user input indicating selection of the second selectable portion, such as for example, receiving an indication of a mouse click on the area of the screen of CSR terminal 122 that includes the second selectable portion.

According to some embodiments, the detailed interactive real-time bar chart may comprise multiple bars representative of data represented in aggregate by the bar associated with the second selectable portion. For example, if the bar associated with the second selectable portion represents data for the year 2016, the detailed interactive real-time bar chart may be a chart having multiple bars that represent the months of the year 2016.

In some embodiments, the system may detect one or more oral statements made in association with the incoming phone call via an audio sensor associated with, for example, call center server 112 or a phone associated with CSR terminal 122. According to some embodiments, the system may convert the one or more oral statements to written text via a voice-to-text functionality (e.g. via call center server 120), analyze the written text using natural language processing techniques to determine the substance of the conversation (e.g. via NLP device 124), and display a recommendation for new interactive real-time data to display via display window 302 based on the identification of the merchant or customer and the determined substance of the conversation.

According to some embodiments, the recommendation may be displayed via an electronic display associated with CSR terminal 122. In some embodiments, automated assistant device 120 may generate the recommendation based on the determined substance of the conversation. For example, if the system (e.g., call center server 112) determines that a customer on the incoming phone call says "how many applications did you do for us last year?", the system (e.g., NLP device 124) may determine that the customer is requesting information regarding the number of loan applications the entity associated with organization 108 processed or issued for the customer in the previous year, and may generate an instruction to automated assistant device 120 to retrieve that data. Automated assistant device 120 may retrieve the requested data from a storage device and transmit the data to CSR terminal 122 as interactive real-time data for display. In this way, system 100 may automatically present interactive real-time data to a salesperson that is relevant to the sales call, without the salesperson having to request it.

As used in this application, the terms "component," "module," "system," "server," "processor," "memory," and the like are intended to include one or more computer-related units, such as but not limited to hardware, firmware, a combination of hardware and software, software, or software in execution. For example, a component may be, but is not limited to being, a process running on a processor, an object, an executable, a thread of execution, a program, and/or a computer. By way of illustration, both an application running on a computing device and the computing device can be a component. One or more components can reside within a process and/or thread of execution and a component may be localized on one computer and/or distributed between two or more computers. In addition, these components can execute from various computer readable media having various data structures stored thereon. The components may communicate by way of local and/or remote processes such as in accordance with a signal having one or more data packets, such as data from one component interacting with another component in a local system, distributed system, and/or across a network such as the Internet with other systems by way of the signal.

Certain embodiments and implementations of the disclosed technology are described above with reference to block and flow diagrams of systems and methods and/or computer program products according to example embodiments or implementations of the disclosed technology. It will be understood that one or more blocks of the block diagrams and flow diagrams, and combinations of blocks in the block diagrams and flow diagrams, respectively, can be implemented by computer-executable program instructions. Likewise, some blocks of the block diagrams and flow diagrams may not necessarily need to be performed in the order presented, may be repeated, or may not necessarily need to be performed at all, according to some embodiments or implementations of the disclosed technology.

These computer-executable program instructions may be loaded onto a general-purpose computer, a special-purpose computer, a processor, or other programmable data processing apparatus to produce a particular machine, such that the instructions that execute on the computer, processor, or other programmable data processing apparatus create means for implementing one or more functions specified in the flow diagram block or blocks. These computer program instructions may also be stored in a computer-readable memory that can direct a computer or other programmable data processing apparatus to function in a particular manner, such that the instructions stored in the computer-readable memory produce an article of manufacture including instruction means that implement one or more functions specified in the flow diagram block or blocks.

As an example, embodiments or implementations of the disclosed technology may provide for a computer program product, including a computer-usable medium having a computer-readable program code or program instructions embodied therein, said computer-readable program code adapted to be executed to implement one or more functions specified in the flow diagram block or blocks. Likewise, the computer program instructions may be loaded onto a computer or other programmable data processing apparatus to cause a series of operational elements or steps to be performed on the computer or other programmable apparatus to produce a computer-implemented process such that the instructions that execute on the computer or other programmable apparatus provide elements or steps for implementing the functions specified in the flow diagram block or blocks.

Accordingly, blocks of the block diagrams and flow diagrams support combinations of means for performing the specified functions, combinations of elements or steps for performing the specified functions, and program instruction means for performing the specified functions. It will also be understood that each block of the block diagrams and flow diagrams, and combinations of blocks in the block diagrams and flow diagrams, can be implemented by special-purpose, hardware-based computer systems that perform the specified functions, elements or steps, or combinations of special-purpose hardware and computer instructions.

Certain implementations of the disclosed technology are described above with reference to user devices may include mobile computing devices. Those skilled in the art recognize that there are several categories of mobile devices, generally known as portable computing devices that can run on batteries but are not usually classified as laptops. For example, mobile devices can include, but are not limited to portable computers, tablet PCs, internet tablets, PDAs, ultra-mobile PCs (UMPCs), wearable devices, and smart phones. Additionally, implementations of the disclosed technology can be utilized with internet of things (loT) devices, smart televisions and media devices, appliances, automobiles, toys, and voice command devices, along with peripherals that interface with these devices.

In this description, numerous specific details have been set forth. It is to be understood, however, that implementations of the disclosed technology may be practiced without these specific details. In other instances, well-known methods, structures and techniques have not been shown in detail in order not to obscure an understanding of this description. References to "one embodiment," "an embodiment," "some embodiments," "example embodiment," "various embodiments," "one implementation," "an implementation," "example implementation," "various implementations," "some implementations," etc., indicate that the implementation(s) of the disclosed technology so described may include a particular feature, structure, or characteristic, but not every implementation necessarily includes the particular feature, structure, or characteristic. Further, repeated use of the phrase "in one implementation" does not necessarily refer to the same implementation, although it may.

Throughout the specification and the claims, the following terms take at least the meanings explicitly associated herein, unless the context clearly dictates otherwise. The term "connected" means that one function, feature, structure, or characteristic is directly joined to or in communication with another function, feature, structure, or characteristic. The term "coupled" means that one function, feature, structure, or characteristic is directly or indirectly joined to or in communication with another function, feature, structure, or characteristic. The term "or" is intended to mean an inclusive "or." Further, the terms "a," "an," and "the" are intended to mean one or more unless specified otherwise or clear from the context to be directed to a singular form. By "comprising" or "containing" or "including" is meant that at least the named element, or method step is present in article or method, but does not exclude the presence of other elements or method steps, even if the other such elements or method steps have the same function as what is named.

While certain embodiments of this disclosure have been described in connection with what is presently considered to be the most practical and various embodiments, it is to be understood that this disclosure is not to be limited to the disclosed embodiments, but on the contrary, is intended to cover various modifications and equivalent arrangements included within the scope of the appended claims. Although specific terms are employed herein, they are used in a generic and descriptive sense only and not for purposes of limitation.

This written description uses examples to disclose certain embodiments of the technology and also to enable any person skilled in the art to practice certain embodiments of this technology, including making and using any apparatuses or systems and performing any incorporated methods. The patentable scope of certain embodiments of the technology is defined in the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

### Exemplary Use Cases

The following exemplary use cases describe examples of a typical user flow pattern. They are intended solely for explanatory purposes and not in limitation. A financial service provider may compete with other financial service providers to provide loans to individuals who purchase vehicles from car dealerships. To facilitate the loan, it may be common for a car dealership to call the financial service provider to discuss terms of the loan, and the car dealership may call numerous financial service providers to find the best deal. Upon receiving such a call, the system (e.g., via call center server 112) may determine the identity of the car dealership associated with the incoming call and may automatically display information associated with the car dealership on a salesperson's computer (e.g., via CSR terminal 122). The system may then display a chat user interface to the salesperson that allows the salesperson to input requests for information (e.g., via CSR terminal 122). For example, the salesperson may type "show total applications" to request to see the total number of loan applications the financial service provider has outstanding with the car dealership. The system (e.g., via NLP device 124) may process the text input by the salesperson using natural language processing techniques to understand the nature of the request and then may locate (e.g., via automated assistant device 120) and display (e.g., via CSR terminal 122) the requested information within a display window of the chat user interface. The system (e.g., via automated assistant device 120) may also use machine learning techniques to understand and predict what information a particular salesperson may request or find useful to aid in responding to requests or to even provide information proactively without being prompted by the user. The information may be displayed as an interactive chart or table that may allow the user to quickly manipulate the view of the data to see for example, data at a higher or lower level, or view related data. For example, the system may enable the salesperson to click on a bar in a bar chart (e.g., via CSR terminal 122) to indicate that the user wants to "drill down" on the data, causing the system to generate (e.g., via automated assistant device 120) and display a new chart that shows the data of the bar of the bar chart in more granular detail. For example, if a bar in a first bar chart shows the total number of loan applications in a particular year, in response to the salesperson clicking on the bar, the system (e.g., via automated assistant device 120) may generate and display a new more detailed bar chart that shows the number of applications by each month of the year. The system (e.g, via automated assistant device 120) may include a number of predetermined or customizable actions or commands that allow a user to interact with, manipulate, or change the view of displayed data or cause related data to be displayed. The system may further enable the salesperson to modify the data via the chat user interface, such that the data is updated at the source of the data (e.g., at database 118). For example, if a relationship manager decides to restructure a loan application displayed in the display window of the chat user interface to provide a better deal to a customer by, for example, giving an exception or reducing the APR on the deal, the relationship manager may edit the terms of the application displayed in the display window by inputting a change to data via the display device (e.g., via CSR terminal 122) by clicking, typing, speaking commands, or any other such user input. In response to modifying the terms of the application displayed in the display window, the system (e.g., via automated assistant 120) may automatically update the stored record (e.g., at database 118) of the application to reflect the changes, and may also automatically update any associated metrics (e.g., bank spend or proxy profit) so that all users of the system may have an accurate view of the metrics in real time. In this way, the system may enable a salesperson to quickly view and interact with data related to a particular car dealership so that the salesperson will have pertinent, up-to-date data at their fingertips in order to assist them in real time with making a sale of a loan to the car dealership.

These computer-executable program instructions may be loaded onto a general-purpose computer, a special-purpose computer, a processor, or other programmable data processing apparatus to produce a particular machine, such that the instructions that execute on the computer, processor, or other programmable data processing apparatus create means for implementing one or more functions specified in the flow diagram block or blocks. These computer program instructions may also be stored in a computer-readable memory that can direct a computer or other programmable data processing apparatus to function in a particular manner, such that the instructions stored in the computer-readable memory produce an article of manufacture including instruction means that implement one or more functions specified in the flow diagram block or blocks. As an example, implementations of the disclosed technology may provide for a computer program product, including a computer-usable medium having a computer-readable program code or program instructions embodied therein, said computer-readable program code adapted to be executed to implement one or more functions specified in the flow diagram block or blocks. Likewise, the computer program instructions may be loaded onto a computer or other programmable data processing apparatus to cause a series of operational elements or steps to be performed on the computer or other programmable apparatus to produce a computer-implemented process such that the instructions that execute on the computer or other programmable apparatus provide elements or steps for implementing the functions specified in the flow diagram block or blocks.

As used herein, unless otherwise specified the use of the ordinal adjectives "first," "second," "third," etc., to describe a common object, merely indicate that different instances of like objects are being referred to, and are not intended to imply that the objects so described must be in a given sequence, either temporally, spatially, in ranking, or in any other manner.

## Claims

1. Computer-implemented method for providing interactive data in real time (320,320a - 320h) via an automated assistant device (120) for display via a chat interface (300), the method comprising:
establishing (510), with a web server (110), a communication link to a user computing device (102), wherein the user computing device (102) is configured to display a chat interface (300), wherein the chat interface (300) is configured to display user messages (314,318a,318b,314c,318d,314d,314e,310), automatically generated system messages, and interactive real-time data (320,320a - 320h;
receiving (520), from the user computing device (102) and responsive to input in the chat interface (300) by a user of the user computing device (102), first text representing a request for first interactive real-time data (320,320a - 320h);
processing, with a natural language processing (NLP) device (124) in communication with the web server (110), the first text;
generating (530), with an automated assistant device (120) in communication with the NLP device (124), and responsive to processing the first text, first interactive real-time data (320,320a - 320h), wherein the automated assistant device (120) is configured to utilize machine learning to determine what data to present to the user based on a stored profile of the user, and to further automatically generate recommendations for data to present to the user that the user has not specifically requested;
transmitting (540), based on the first request data, the first interactive real-time data (320,320a - 320h) for display at the user computing device (102); and
responsive to receiving data indicative of an update to the first interactive real-time data (320,320a - 320h):
updating (550) the first interactive real-time data (320,320a - 320h); and
transmitting (550) the updated first interactive real-time data (320,320a - 320h) to the user computing device (102) for display.

2. Computer-implemented method of claim 1, wherein the automated assistant device (120) is further configured to communicate with one or more storage devices operating within a closed system such that data may not be deleted, added to, or modified by an unauthorized entity.

3. Computer-implemented method of claim 1 or 2, wherein the stored profile of the user comprises user preferences, history, and data associated with the user.

4. Computer-implemented method of any one of claims 1 to 3, wherein the updated first interactive real-time data (320,320a - 320h) is transmitted to the user computing device (102) for display while the user computing device (102) is displaying the first interactive real-time data (320,320a - 320h).

5. Computer-implemented method of any one of claims 1 to 4, wherein the interactive real-time data (320,320a - 320h) is displayed as an interactive chart.

6. Computer-implemented method of claim 5, further comprising:
receiving a user input indicative of a command to display a more detailed view of a portion of the interactive real-time chart; and
transmitting to the user computing device (102) for display, a more detailed view of the portion of the interactive real-time chart.

7. Computer-implemented method of any one of claims 1 to 6, further comprising:
transmitting to the user computing device (102), one or more automatically generated recommendations for data to present to the user that the user has not specifically requested;
receiving an indication representing a response to the recommendations;
responsive to the user's acceptance of the recommendations, transmitting new interactive real-time data (320,320a - 320h) to the user computing device (102).

8. Computer-implemented method of any one of claims 1 to 7, further comprising:
detecting, by an audio sensor in communication with the web server (110), words spoken by the user; and
responsive to performing voice-to-text analysis of the words spoken by the user, automatically entering text representative of one or more of the words spoken by the user into the input field.

9. Computer-implemented method of any one of claims 1 to 8, further comprising:
detecting, via an audio sensor in communication with a call center server, one or more oral statements made in association with an incoming phone call to the call center server;
converting the one or more oral statements to written text via a voice-to-text functionality;
analyzing the written text using an NLP processor (172) to determine the substance of the conversation; and
displaying, a recommendation for new interactive real-time data (320,320a - 320h) based on the determined substance of the conversation.

10. Computer-implemented method of any one of claims 1 to 9, further comprising:
storing, in the user profile, historical data relating to previous interactions with the user computing device (102), wherein the previous interactions comprise types of data that have been previously requested;
generating, based on the historical data, a recommendation for specific interactive real-time data (320,320a - 320h) to display to the user via the user computing device (102);
transmitting the recommendation to the user computing device (102); and
responsive to receiving an indication of acceptance of the recommendation, transmitting the specific interactive real-time data (320,320a - 320h) to the user computing device (102) for display.

11. System, comprising
a web server (110) configured to
establish a communication link with a user computing device (102), wherein the user computing device (102) is configured to display a chat interface (300),
wherein the chat interface (300) is configured to display user messages (314,318a,318b,314c,318d,314d,314e,310), automatically generated system messages, and interactive real-time data (320,320a - 320h);
and receive, from the user computing device (102) and responsive to input in the chat interface (300) by a user of the user computing device (102), first text representing a request for first interactive real-time data (320,320a - 320h);
a natural language processing (NLP) device (124) in communication with the web server (110), and configured to process the first text;
an automated assistant device (120) in communication with the NLP device (124), and configured to
generate, responsive to processing the first text, first interactive real-time data (320,320a - 320h);
determine, utilizing machine learning, what data to present to the user based on a stored profile of the user;
and automatically generate recommendations for data to present to the user that the user has not specifically requested;
wherein the web server (110) is further configured to
transmit, based on the first request data, the first interactive real-time data (320,320a - 320h) for display at the user computing device (102);
and update the first interactive real-time data (320,320a - 320h) and transmit the updated first interactive real-time data (320,320a - 320h) to the user computing device (102) for display responsive to receiving data indicative of an update to the first interactive real-time data (320,320a - 320h).

12. System of claim 11, further comprising a database (118) for storing the profile of the user, where the profile of the user comprises one or more of: user preferences, history, and data associated with the user.

13. System of claim 11 or 12, further comprising:
an audio sensor in communication with the web server (110), the audio sensor configured to detect words spoken by the user; and
wherein the automated assistant device (120) is further configured to:
analyze the detected words spoken by the user; and
automatically enter text representative of one or more of the words spoken by the user into an input field of the chat interface (300).

14. System of any one of claims 11 to 13, further comprising:
an audio sensor in communication with a call center server (112), the audio sensor configured to detect one or more oral statements made in association with an incoming phone call to the call center server (112); and
wherein the automated assistant device (120) is further configured to:
convert the one or more oral statements to written text via a voice-to-text functionality;
analyze the written text using an NLP processor (172) to determine the substance of the conversation; and
display, a recommendation for new interactive real-time data (320,320a - 320h) based on the determined substance of the conversation.

15. System of any one of claims 11 to 14, further comprising:
a database for storing historical data relating to previous interactions with the user computing device (102), wherein the previous interactions comprise types of data that have been previously requested; and
wherein the automated assistant device (120) is further configured to generate,
based on the historical data, a recommendation for specific interactive real-time data (320,320a - 320h) to display to the user via the user computing device (102); and
wherein the web server (110) is further configured to:
transmit the recommendation to the user computing device (102); and
transmit the specific interactive real-time data (320,320a - 320h) to the user computing device (102) for display responsive to receiving an indication of acceptance of the recommendation.
